# EUROPÄISCHE PATENTSCHRIFT

(11) **EP 2 870 429 B1**
(45) Veröffentlichungstag und Bekanntmachung des Hinweises auf die Patenterteilung: **26.12.2018**
(21) Anmeldenummer: 13744951.8
(22) Anmeldetag: 05.07.2013
(51) Int. Cl.: G01B 21/20, B61K 9/08, E01B 31/12, E01B 31/15, E01B 31/17, E01B 35/00, E01B 35/02, E01B 35/06, G01B 5/20, G01B 5/207, G01B 7/28, G05B 19/4093

(54) **ANORDNUNG ZUR ERFASSUNG DES PROFILS VON SCHIENEN IN VERLEGTEN GLEISANLAGEN**
ARRANGEMENT FOR DETERMINING THE PROFILE OF RAILS IN LAID TRACK SYSTEMS
SYSTÈME DE MESURE DU PROFIL DE RAILS DE VOIES FERRÉES POSÉES

(30) Priorität: 06.07.2012 DE 102012106102
(43) Veröffentlichungstag der Anmeldung: 13.05.2015
(73) Patentinhaber: Scherf, Wilfried, 07768 Hummelshain (DE); Luddeneit, Michael, 07768 Hummelshain (DE)
(72) Erfinder: Scherf, Wilfried, 07768 Hummelshain (DE); Luddeneit, Michael, 07768 Hummelshain (DE)
(74) Vertreter: Freitag, Joachim
(86) Internationale Anmeldenummer: PCT/DE2013/100248
(87) Internationale Veröffentlichungsnummer: WO 2014/005582

(56) Entgegenhaltungen:
- EP-A1- 0 548 377
- DE-A1- 3 914 830
- US-A- 3 056 209
- US-A- 4 417 466

## Beschreibung

Die Erfindung betrifft eine Anordnung zur Erfassung des Profils von Schienen in verlegten Gleisanlagen, bei der mindestens ein Messkopf zur Vermessung eines Querschnittsprofils von einem Schienenkopf entlang eines Schienenweges vorgesehen ist, wobei der Messkopf zum Querschnittsprofil des Schienenkopfes einstellbar an einem Tragrahmen angebracht ist, der mittels eines von den Schienen geführten Gefährts parallel entlang der Schiene zur Aufnahme eines Längsprofils des Schienenkopfes beweglich ist. Die Erfindung dient der Erfassung des Ist-Zustands einer Gleisgeometrie und wird insbesondere zum Zwecke der Instandhaltung von Gleisanlagen, vorzugsweise von Eisenbahngleisen, verwendet.

Bei der Schieneninstandhaltung handelt es sich vorzugsweise um das Schienenschleifen, wobei die Messungen mindestens vor und nach der Schienenbearbeitung durchgeführt werden sollen.

Es sind bereits Schienenschleifmaschinen bekannt, bei denen Quer- und Längsprofilmessgeräte zur Onlinemessung (während des Schleifprozesses) eingesetzt werden (siehe z.B. EP 0 114 284 B1, Fa. Speno). Diese Vermessung erfolgt basierend auf Berührung mit taktilen Messschneidensensoren und hat dadurch vor allem Nachteile beim schnellen kontinuierlichen Vermessen des Längsprofils.

Im Patent US 4 417 466 A wird ein berührungsloses Messverfahren zur Ermittlung des Querprofils von Schienenköpfen eines Gleises beschrieben, bei dem mehrere benachbarte Abstandssensoren quer auf die Oberseite der Schiene gerichtet und starr mit einem Messwagen als Bezugssystem für die Vermessung in Verbindung stehen. Durch Vergleich mit gespeicherten Sollwerten wird der Verschleiß des Schienenkopfes ermittelt. Es sind keine Hinweise auf die Messung des Schienenlängsprofils vorhanden.

Eine Vorrichtung, die zur Erfassung des Schienenlängsprofil geeignet ist, wird in der DE 3914830 A1 offenbart. Zur Pfeilhöhen- und Spurweitenmessung sind über die gesamte Länge eines Schienenfahrzeugs mehrere, vorzugsweise asymmetrisch verteilt, drei voneinander unabhängige Messeinrichtungen je Schiene am Rahmen befestigt, wobei jede Messeinrichtung einen unabhängig horizontal und vertikal an die Schiene anstellbaren Messkopf aufweist, für den als Bezugssystem der steife, von den Tragachsen unabhängige Rahmen des Schienenfahrzeugs dient. Die Messköpfe sind am Rahmen mittels Lenkern und Teleskoparmen gegenüber der Schiene positionierbar befestigt, um eine zylindrische Messrolle gegen die Oberseite und zwei Schneidenrollen gegen die Innenseite der Schienen anzupressen und so die Pfeilhöhen und Spurweiten mittels je eines Messteleskops aufzunehmen. Es wird auch erwähnt, dass durch Austausch der auf der Schienenoberseite angepressten Messrolle mit einem induktiven Näherungssensor eine Riffelmessung entlang der Schiene möglich ist. Wie dabei jedoch die genaue Führung des Messkopfes gegenüber der Schiene ohne die angepresste Messrolle erfolgt, ist nicht offenbart.

Weiterhin sind diverse taktile und optische Handgeräte bekannt. Als Beispiele können hier die Geräte des Typs RMF und des Typs RM1200 der Firma Vogel & Plötscher GmbH & Co. KG, D-79206 Breisach, das Gerät vom Typ RML der Firma Autech AG, CH-5102 Rupperswill oder das Gerät vom Typ DQM der Firma Ba-Be-D Daimer GmbH, D-85614 Kirchseeon (s. EP 0 548 377 A1) aufgeführt werden, wobei das DQM durch ein optisches DGM zur Spurweitenmessung erweiterbar ist. Zu dieser Kategorie zählt auch das in der US 3 056 209 A offenbarte Konturmessgerät, für das zur Konturmessung an Schienen eine Dreipunktmessung im Sinne der Pfeilhöhenmessung beschrieben ist. Die Handhabung dieser Geräte gestaltet sich relativ schwierig, wenn längere Gleisabschnitte bearbeitet werden und eine genaue Ortzuordnung der Messungen sicherzustellen ist. Hierbei entstehen außerdem Probleme beim Standortwechsel, die durch Gewicht und Abmaße des Gerätes und/oder den Zeitaufwand für Montage bzw. Demontage des Gerätes bedingt sind.

Der Erfindung liegt daher die Aufgabe zugrunde, eine neuartige Möglichkeit zur Messung des Profils von Schienen in verlegten Gleisanlagen zu finden, die eine Erfassung des Quer- und des Längsprofils online und somit auch an längeren Gleisabschnitten im Zusammenwirken mit einer Schienenbearbeitungsmaschine gestattet, wobei die Anordnung der Messwerkzeuge reproduzierbare Messungen bei wiederholter Hin- und Herfahrt erreichen und ausreichend robust gegen Verunreinigungen des Bearbeitungsvorgangs sein soll.

Des Weiteren sollen einfache und reproduzierbare Ortszuordnungen der Messwerte auch in Schienenbögen sowie eine Anpassung der Messwerkzeuge an die Spurweite des Gleises problemlos möglich sein.

Erfindungsgemäß wird die Aufgabe mit einer Anordnung zur Erfassung des Profils von Schienen in verlegten Gleisanlagen gemäß dem unabhängigen Vorrichtungsanspruch 1 gelöst. Vorteilhafte Ausgestaltungen dieser Anordnung ergeben sich aus den Merkmalen der abhängigen Ansprüche.

Vorteilhaft weist das Führungsprofil Reihen von Gleitstößeln auf, die entlang von zu erwartenden Kontaktlinien des L-förmigen Führungsprofils mit der Schienenoberseite und der Schieneninnenseite angeordnet sind, um einerseits den Verschleiß des Führungsprofils zu verhindern und dessen Gleitfähigkeit auf der Schiene zu verbessern und andererseits die Welligkeit der Schienen entlang eines Schienenweges (d.h. eines Schienenabschnitts, den das Führungsprofil überspannt) auszugleichen und Schwingungen zu dämpfen.

Dazu sind die Gleitstößel zweckmäßig innerhalb des Führungsprofils in Richtung der Schienenoberseite bzw. der Schieneninnenseite mittels Dämpfungselementen elastisch gelagert. Vorzugsweise weisen sie an ihrer dem Schienenkopf zugewandten Seite jeweils einen kreisförmig verbreiterten Gleitkopf auf.

Es erweist sich als besonders vorteilhaft, dass die Gleitstößel eine zentrale Bohrung aufweisen, an die eine Fluidzuführung ankoppelbar ist, um zwischen Gleitkopf und Schiene eine Fluidlagerung zu erzeugen. Diese ist zweckmäßig als Gaslagerung, die vorzugsweise mit Druckluft betrieben wird, ausgeführt.

In einer bevorzugten Ausführung weist der Messkopf in seinem Messkopfgehäuse einen taktilen Messtaster mit einem vertikal orientierten Messstab auf, wobei der Messtaster an einem Messtasterschlitten befestigt ist, der mittels eines Messtastervertikalzylinders entlang einer Messtasterführung im Messkopfgehäuse vertikal so bewegbar ist, dass ein vorgegebener Messweg des Messstabes des taktilen Messtasters gegenüber der Schienenoberseite einstellbar ist. Bei aufgesetztem und angepresstem Führungsprofil wird dabei vorzugsweise auf eine Mittelstellung seines vorgegebenen (verfügbaren) Messweges eingestellt.

Vorteilhaft weist das Führungsprofil zwischen dem taktilen Messtaster und der Schienenoberseite ein Übertragungselement in Form eines einseitigen Hebels auf, das an einem ersten Ende um eine horizontale Drehführungsachse drehbar und an einem zweiten Ende mittels eines am Messkopfgehäuse schwenkbar befestigten vertikalen Druckzylinders vertikal so beweglich ist, dass ein zwischen der Drehführungsachse und dem Druckzylinder am Übertragungselement angeordneter Verschleißstößel an die Schienenoberseite anpressbar ist und der Messstab des taktilen Messtasters am Übertragungselement dem Verschleißstößel gegenüberliegend aufsitzt, sodass der Messstab entsprechend einem Profilverlauf entlang der Schienenoberseite auf und ab beweglich ist, ohne einem Verschleiß zu und reibungsbedingten Querschwingungen ausgesetzt zu sein.

Es weist sich als vorteilhaft, wenn der Messstab des taktilen Messtasters eine geringere Andruckkraft gegenüber dem Übertragungselement aufweist als der Druckzylinder des Übertragungselements über den Verschleißstößel auf die Schienenoberseite ausübt, um den Messtaster von (vertikalen) Schwingungen zu entkoppeln, die durch Bewegungen des Verschleißstößels aufgrund des Höhenprofils entlang der Schienenoberseite bedingt sind.

In einer weiteren vorteilhaften Ausführung weist der Messkopf in seinem Messkopfgehäuse mindestens einen optischen Messtaster auf, wobei der mindestens eine optische Messtaster zur Schiene so ausgerichtet ist, dass er einen linienförmigen Messbereich quer zur Schiene aufweist, der mindestens die Schienenoberseite abtastet.

Der Messkopf ist im Messkopfrahmen zweckmäßig austauschbar befestigt, sodass ein und derselbe Messkopf im Messkopfrahmen an beiden Seiten des Gefährts wechselseitig einsetzbar ist oder zwei gegenüberliegende Messköpfe einfach austauschbar sind.

Die zwei horizontalen Linearantriebe des Messkopfrahmens gegenüber dem Tragrahmen des Gefährts, das bevorzugt als Messwagen ausgebildet ist, weisen vorzugsweise jeweils einen ersten und einen zweiten Horizontalzylinder auf, die unabhängig voneinander steuerbar sind. Dabei sind die ersten Horizontalzylinder der horizontalen Linearantriebe zum Eingleisen des Gefährts mit den Messköpfen zwischen die Schienenköpfe und zum Spurhalten und die zweiten Horizontalzylinder zum Anpressen der Führungsprofile an die Schieneninnenseiten für die Profilerfassung der Schienenköpfe vorgesehen.

Vorteilhaft haben die zwei horizontalen Linearantriebe jedes Messkopfrahmens am Tragrahmen des Gefährts eine mittige Bezugsbasis, die auf die Mitte der Schienenführung des Gefährts festgelegt ist.

In einer ersten bevorzugen Ausführung zur Spureinstellung der Messköpfe sind je Messkopfrahmen zwei horizontale Linearantriebe mit ersten und zweiten Horizontalzylindern gegenüber dem Tragrahmen mit der mittig definierten Bezugsbasis des Gefährts vorgesehen, um die Steuerung zum Eingleisen und Anpressen der gegenüberliegenden Führungsprofilschienen vorzunehmen.

In einer alternativen Variante zur Spureinstellung der Messköpfe ist zweckmäßig ein Spurpaket vorgesehen, das eine teleskopartige direkte Verbindung zwischen den Messkopfrahmen darstellt und einen linken Spurzylinder, einen rechten Spurzylinder mit einer dazwischen angeordneten Spurstange aufweist, wobei der linke und rechte Spurzylinder jeweils an einem Auflager an den gegenüberliegenden Messkopfrahmen befestigt sind und als Bezugsbasis die Gleismitte angenommen wird, sodass eine direkte Steuerung zum Eingleisen und Anpressen der gegenüberliegenden Führungsprofile vorhanden ist.

Die Erfindung basiert auf der Grundüberlegung, dass insbesondere bei der Vermessung des Längsprofils der Schienen eine Vorortvermessung - online mit der Steuerung einer Schienenbearbeitungsmaschine - wünschenswert ist, jedoch aufgrund der beim Einsatz von Schienenbearbeitungsmaschinen auftretenden Kontaminationen die Vermessung des Schienenprofils hinreichend separiert und wenig störanfällig gestaltet werden muss.

Des Weiteren ist beim Einsatz einer Messanordnung im direkten Zusammenwirken mit einer Schienenschleifmaschine die Robustheit des Messsystems sowie die Reproduzierbarkeit der Messungen sowohl bei Vorwärts- als auch bei Rückwärtsfahrt der Messanordnung zu gewährleisten. Diese widerstreitenden Problemstellungen löst die Erfindung mit einer Messanordnung, die - bevorzugt als Bestandteil einer Schienenbearbeitungsmaschine - zum unmittelbaren Vermessen des Schienenquer- und -längsprofils bei deren Wiederherstellung eingesetzt wird. Dabei werden als Messwerkzeuge in einem kompakten Messkopf mindestens ein abstandsmessender Sensor zur berührungslosen oder taktilen Vermessung des Längsprofils (Welligkeit) und eine Querprofilmesseinrichtung für das (gleisinnere) Querprofil des Schienenkopfes sowie eine Führungsprofilschiene (kurz: Führungsprofil) zur gleitenden Konstantführung des Messkopfes am Schienenkopf verwendet. Das Führungsprofil ist als Bezugsbasis der Schienenkopfvermessung in Form eines L-Profils in einer der aufzufindenden Verschleißwelligkeit des Schienenkopfes angepassten Länge ausgebildet und wird an der Schieneninnenkante des Schienenkopfes zweiflächig gleitend geführt. Mit diesem Führungsprofil ist der mindestens eine Abstandssensor einstellbar, aber fest gekoppelt, sodass das Längsprofil des Schienenkopfes bezüglich des Bezugsniveaus des Führungsprofils erfasst wird. Mit einem Messwagen kann die Messeinrichtung sowohl einseitig als auch beidseitig die Schienenköpfe eines Gleises exakt aufnehmen und zuverlässig und schlupffrei online an eine Arbeitsmaschine gekoppelt werden, ohne dass die Messeinrichtung zu nah mit dem Bearbeitungstrakt der Arbeitsmaschine (z.B. Schienenschleifmaschine) in Kontakt kommt.

Die Erfindung ermöglicht die Erfassung des Quer- und des Längsprofils von Schienen in verlegten Gleisanlagen, bei der das Quer- und das Längsprofil der Schienen online und somit auch an längeren Gleisabschnitten direkt im Zusammenwirken mit einer Schienenbearbeitungsmaschine ermöglicht wird, wobei die Anordnung der Messwerkzeuge ausreichend robust gegen Kontaminationen durch den Bearbeitungsvorgang ist und eine einfache und reproduzierbare Ortszuordnung der Messwerte gestattet.

Die Erfindung wird nachfolgend anhand von Ausführungsbeispielen und Abbildungen näher erläutert. Dabei zeigen:
- Fig. 1:: eine perspektivische Komplettdarstellung eines Messwagens für die Erfassung des Quer- und Längsprofils des Schienenkopfes in verlegten Gleisen;
- Fig. 2:: eine Draufsicht auf den Messwagen zur Darstellung der horizontalen Verschiebung des Messkopfes quer zur Schiene;
- Fig. 3:: eine Seitenansicht des Messwagens mit Darstellung der Einstellungsfreiheitsgrade zusätzlich zu den horizontalen Freiheitsgraden gemäß Fig. 2;
- Fig. 4:: eine perspektivische Darstellung eines Messkopfes mit abstandsmessendem Sensor (als Blackbox) und Führungsprofilschiene (Führungsprofil) zur Einstellung der Bezugsbasis für die Längsprofilmessung der Schiene;
- Fig. 5:: ein Querschnittsprofil des Führungsprofils mit horizontalen und vertikalen Stößeln sowie deren Arbeitswegen am Schienenkopf;
- Fig. 6:: eine Gestaltungsvariante der Erfindung zur Gleisvermessung mit Horizontalzylindern in einer Frontansicht des Messwagens, in der die Messköpfe gegenüber der Bezugsbasis des Messwagens an die Schieneninnenseite gepresst werden;
- Fig. 7:: eine weitere Ausführung der Erfindung zur Gleisvermessung in einer Frontansicht des Messwagens, bei der die Messköpfe gegeneinander, unabhängig von der Bezugsbasis des Messwagens gegen die Schieneninnenseite gepresst werden;
- Fig. 8:: eine Darstellung des Messkopfes in einer Ausführung als eindimensionaler taktiler Abstandssensor (z.B. kommerzieller Messtaster der Fa. Vogel & Plötscher GmbH, Breisach, DE) mit den Einstellmöglichkeiten gegenüber dem (hier nicht eingezeichneten) Führungsprofil;
- Fig. 9:: eine Ausführungsform des Messkopfes mit zwei optisch abstandsmessenden Sensoren zur Profilmessung des Schienenkopfes.

Die Anordnung zur Erfassung des Schienenprofils in verlegten Gleisanlagen ist auf einem schienengestützten Gefährt angebracht, das bevorzugt als Wagen mit vier Rädern 13 ausgeführt ist und nachfolgend als Messwagen 1 bezeichnet wird. Es kann aber auch als auf dem Gleis schlittenartig gleitendes Gestell ausgeführt sein.

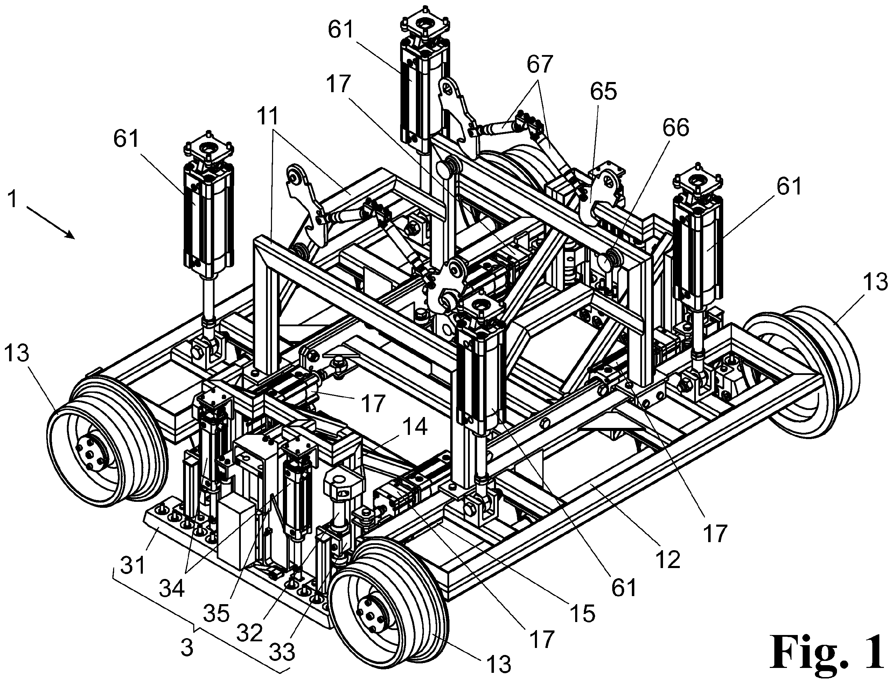

Der Messwagen 1 besteht - wie in Fig. 1 dargestellt - im Wesentlichen aus zwei Stützkomponenten, dem Tragrahmen 11, der als aus Profilstahl zusammengesetztes Schweißteil ausgebildet und mit zwei parallelen austauschbaren und, wegen unterschiedlicher Gleisbreiten, einstellbaren Radachsen 12 auf vier Rädern 13 stehen ausgeführt ist, sowie mindestens einem zu einer Schiene 2 ausgerichteten Messkopf 3. Die Radachsen 12 sind antriebsfrei, da der Messwagen 1 bestimmungsgemäß durch eine Schienenbearbeitungsmaschine (nicht gezeigt) bewegt wird oder aber von einem beliebigen anderen motorgetriebenen Fahrzeug oder auch von Hand gezogen werden kann.

Für den Transport des Messwagens 1 können am Tragrahmen 11 zusätzlich Vertikalzylinder 61 zum Ein- und Ausgleisen vorgesehen sein, wenn der Messwagen 1 an einer Bearbeitungsmaschine mitgeführt wird, um ihn für die Online-Messung am Bearbeitungsort bereitzuhalten und keiner mechanischen Belastung während des Transports auszusetzen. Alternativ kann der Messwagen 1 aber auch mit einem Kraftfahrzeug auf der Straße bis zum Einsatzort gefahren und dort per Kran abgesetzt werden.

Das Herzstück des Messwagens 1 sind der Messkopf 3 (und gegebenenfalls ein gegenüberliegender Messkopf 4) sowie die dafür vorgesehenen Zustelleinheiten, die einerseits die zwei lateral zur Schiene 2 horizontal beweglichen Messkopfrahmen 14 gegenüber der Spurbreite des Gleises anpassbar bewegen und andererseits die an den Messkopfrahmen 14 vertikal einstellbaren Führungen und Antriebe für die Messkopfgehäuse 35 bewegen.

Der Messkopf 3 besteht aus einer Führungsprofilschiene, die als L-förmiges Führungsprofil 31 ausgebildet ist, und einem abstandsmessenden Sensor, der in dem Messkopfgehäuse 35 gegenüber dem Führungsprofil 31 einstellbar angebracht ist.

Der Messkopf 3 ist mit dem Tragrahmen 11 so verbunden, dass er mittels eines Messkopfrahmens 14 horizontal und mittels an diesem vorhandener Vertikalführungen 32 als Einheit von Messkopfgehäuse 35 und Führungsprofil 31 vertikal beweglich ist. Vorzugsweise ist der Messkopf 3 so am Messkopfrahmen 14 angebracht, dass er austauschbar ist. Das heißt, er kann - je nach Bedarf - wechselweise oder permanent gegenüberliegend am Messwagen 1, auf die eine oder die andere Schiene 2 oder gleichzeitig auf beide Schienen 2 eines Gleises ausgerichtet, angebracht sein, um entweder abwechselnd oder permanent an beiden Schienen 2 das Profil des Schienenkopfes 21 zu erfassen. Sofern die Forderung nach einer platzsparenden integrierten Messeinrichtung besteht, die z.B. direkt an einer Schienenbearbeitungsmaschine messen soll, kann der Messkopf 3 auch an geeigneter Stelle am Rahmen der Bearbeitungsmaschine angebracht werden.

Ein weiterer Vorteil des austauschbaren Messkopfes 3 am Messkopfrahmen 14 besteht darin, dass beliebige Messtaster 36, 37 und/oder 38 montierbar sind und eine einfachere Anpassung an verschiedene Spurweiten zwischen 1000 mm und 1500 mm möglich ist.

Für die Bewegung des Messkopfes 3 ist der Messkopfrahmen 14 am Messwagen 1 horizontal quer zur Gleisrichtung verschiebbar gelagert, indem am Tragrahmen 11 mit mindestens eine Horizontalführung 15 über Horizontalführungslager 16 lateral zur Bewegungsrichtung des Messwagens 1 geführt ist. Die horizontale Verschiebung erfolgt mittels horizontaler Linearantriebe 17.

In der Ausführung des Messwagens 1 gemäß Fig. 1 sind dazu zwei parallel zueinander ausgerichtete horizontale Linearantriebe 17 je Messkopfrahmen 14 vorgesehen. Diese Maßnahme stellt sicher, dass das Führungsprofil 31, das die Bezugsbasis des Messkopfes 3 darstellt, in jedem Fall zuverlässig an die Schieneninnenseite 23 des Schienenkopfes 21 angepresst wird.

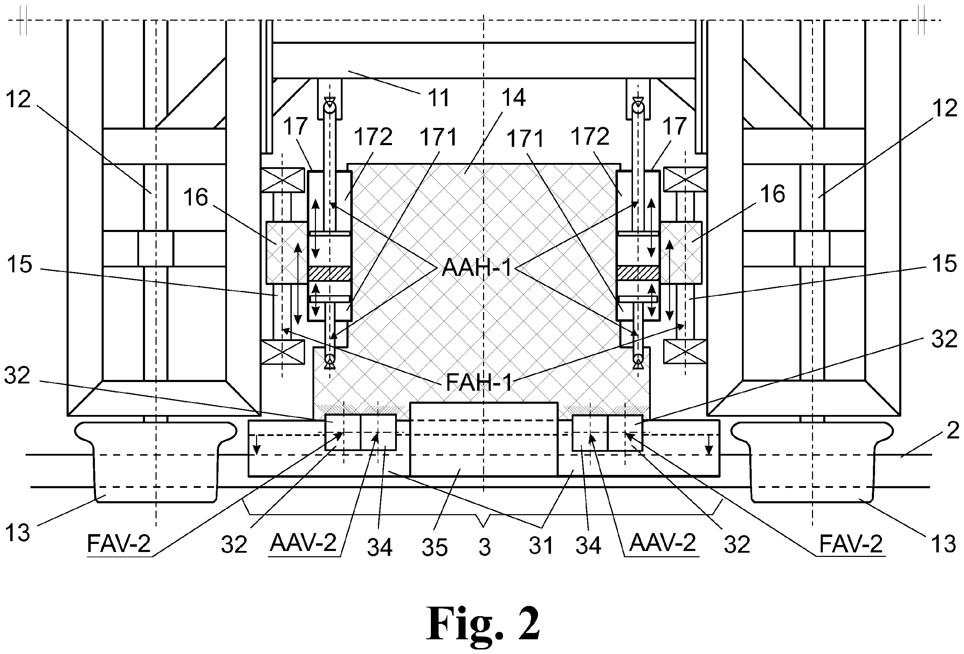

Fig. 2 zeigt eine Draufsicht des Messwagens 1 mit den horizontalen Antriebsachsen AAH-1 und den horizontalen Führungsachsen FAH-1, die die horizontalen Bewegungen der Messköpfe 3 und 4 definieren. Die Führungsachsen FAH-1 bezeichnen hierbei jeweils die Führungsbahnen für den Messkopf 3 und den gegenüberliegenden Messkopf 4. Die Antriebsachsen AAH-1 kennzeichnen die Hubachsen der horizontalen Linearantriebe 17 in Form von zwei gekoppelten Horizontalzylindern 171, 172, die die horizontale Verschiebung ausführen. Die Horizontallager 16 der Messköpfe 3, 4 realisieren die exakte horizontale und parallele Bewegung der Messköpfe 3, 4 entlang der Horizontalführungen 15 am Tragrahmen 11 des Messwagens 1. Durch die Linearführung 32 wird die vertikale Verschiebung des gesamten Messkopfes 3 entlang der vertikalen Führungsachsen FAV-2 ermöglicht.

Gemäß der Ausführung von Fig. 2 bestehen die horizontalen Linearantriebe 17 vorzugsweise aus zwei in Reihe geschalteten (pneumatischen oder hydraulischen) Fluidzylindern, einem ersten und einem zweiten Horizontalzylinder 171 und 172, deren Kolben sich gegenläufig zueinander bewegen. Sie sind einerseits am Tragrahmen 11, der die zwei Radachsen 12 miteinander verbindet und von diesen rollfähig getragen wird, und andererseits am Messkopfrahmen 14 angelenkt. Der Messkopfrahmen 14 ist lediglich aus Übersichtlichkeitsgründen als gekreuzt schraffierte Fläche dargestellt, obwohl er zweckmäßig eine aus Profilstahl gefertigte Rahmenstruktur aufweist, und ist entlang zweier paralleler Horizontalführungen 15 in Horizontallagern 16 verschiebbar gelagert. Über den (stilisiert gezeichneten) Messkopfrahmen 14 wird mittels der linearen Bewegung der zwei horizontalen Linearantriebe 17, jeweils bestehend aus erstem und zweitem Horizontalzylinder 171 und 172, der Messkopf 3 horizontal entlang der parallelen Führungsachsen FAH-1 quer zur Schiene 2 bewegbar. Dadurch sind drei definierte Positionen einstellbar.

Sind die ersten Horizontalzylinder 171 und die zweiten Horizontalzylinder 172 eingefahren, befindet sich der am verschiebbaren Messkopfrahmen 14 angekoppelte Messkopf 3 in einer Null- bzw. Transportposition.

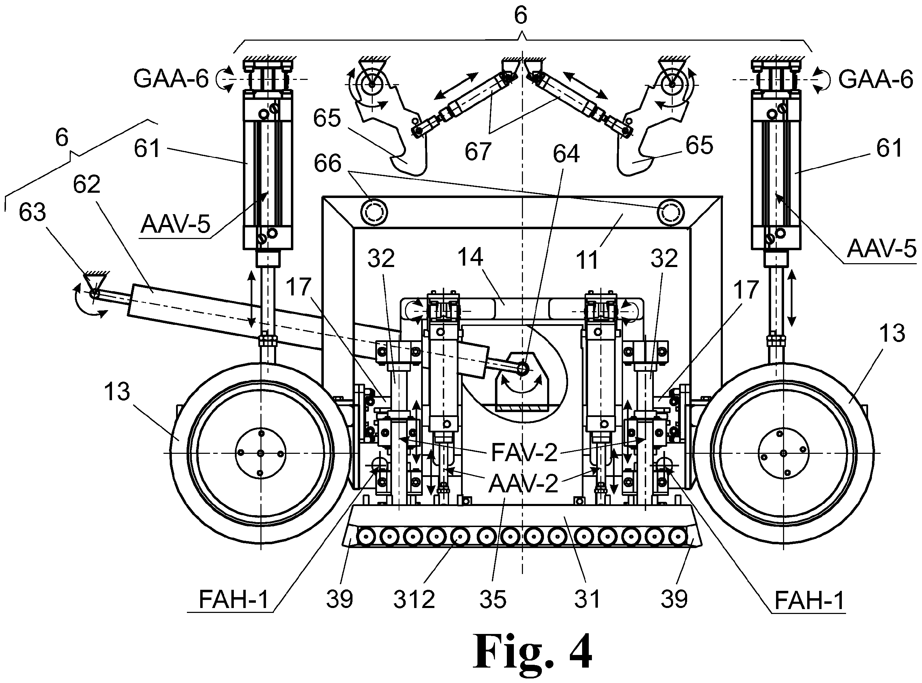

Das Ausfahren der beiden ersten Horizontalzylinder 171, die gegenüber den zweiten Horizontalzylindern 172 einen kleineren Hub aufweisen, bewirkt eine Querbewegung und damit ein Annähern des Messkopfes 3 mit dem Führungsprofil 31 gegenüber der Schiene 2, ohne diese zu berühren. Dies geschieht, um ein sicheres Eingleisen des Messwagens 1 (siehe auch Erläuterungen zu Fig. 4) ohne Gefährdung des Messkopfes 3 zu garantieren

Mit dem Ausfahren der zweiten Horizontalzylinder 172 wird das Anpressen des Führungsprofils 31 an die Schieneninnenseite 23 bewirkt und eine Kompensation von eventuellen Spurweitenschwankungen ermöglicht. Sind beide Horizontalzylinder 171 und 172 ausgefahren, ist die Arbeits- bzw. Messposition erreicht.

Am Messkopfrahmen 14 sind außerdem zwei parallele Vertikalführungen 32 zur vertikalen Bewegung des Messkopfes 3 gegenüber der Schiene 2 angebracht, an denen das Führungsprofil 31 entlang der vertikalen Führungsachsen FAV-2 geführt wird. Zur Ausführung der Vertikalbewegung entlang der Antriebsachsen AAV-2 sind zwischen Messkopfrahmen 14 und Führungsprofil 31 vertikale Linearantriebe 34 angelenkt. Letztere könnten aber auch am Messtastergehäuse 35 angreifen. Es ist ebenso möglich, alternativ die Vertikalführungen 32 am Messtastergehäuse 35 zu platzieren und diese gegebenenfalls auf eine einzige Vierkant- oder Schwalbenschwanz-Führung (nicht dargestellt) zu reduzieren.

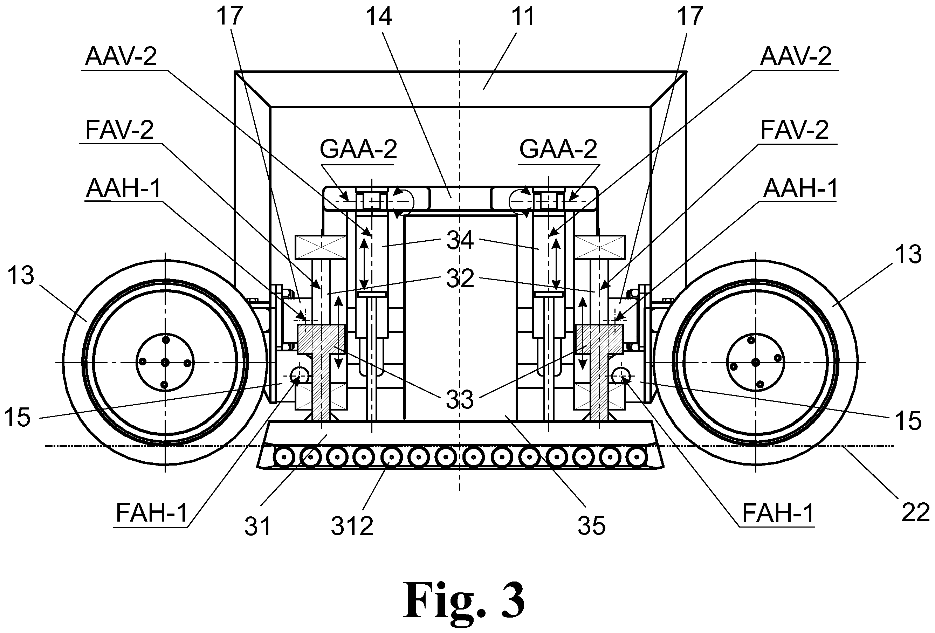

In Fig. 3 sind zunächst die Freiheitsgrade des Messkopfes 3 dargestellt. Die horizontalen Bewegungsachsen, nämlich die horizontalen Antriebsachsen AAH-1 für den Messkopfrahmen 14 und die zugeordneten horizontalen Führungsachsen FAH-1 verlaufen in dieser Seitenansicht des Messwagens 1 orthogonal in die Zeichnungsebene hinein. Ihre Anordnung und Ausrichtung sind besser in Fig. 2 zu erkennen.

Die vertikale Antriebsachse AAV-2 des Messkopfes 3 - wie in Fig. 3 dargestellt - bewirkt die Bewegung des Führungsprofils 31 in vertikaler Richtung. Dazugehörig sind die vertikalen Führungsachsen FAV-2, deren Führungsbahnen gegebenenfalls bei entsprechender Formgebung der Führungselemente (z.B. Vierkant- oder Schwalbenschwanzführung etc.) auch auf eine einzige mittige Führungsachse FAV-2 (nicht gezeigt) reduziert werden kann.

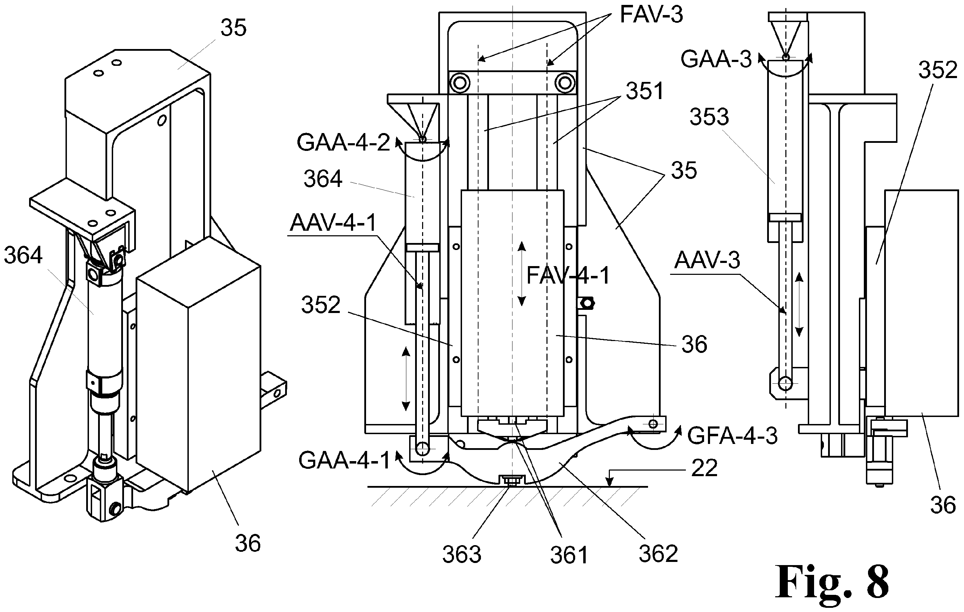

Fig. 3 zeigt eine Seitenansicht des Messwagens 1 auf den Messkopf 3. Der Messkopf 3 besteht bewegungsmechanisch aus dem Messkopfrahmen 14, einem Messkopfgehäuse 35 und einem Führungsprofil 31, wobei die horizontalen Linearantriebe 17 zwischen dem Tragrahmen 11 des Messwagens 1 und dem Messkopfrahmen 14 wirken und die vertikalen Linearantriebe 34 zwischen dem Messkopfrahmen 14 und dem Führungsprofil 31, das mit dem Messkopfgehäuse 35 starr verbunden ist, wirksam sind. Das Messkopfgehäuse 35 enthält z.B. einen taktilen Messtaster 36. Der Messtaster 36 weist, wie in Fig. 8 dargestellt, einen Messstab 361 sowie ein vorgelagertes Übertragungselement 362 zwischen Messtaster 36 und Schiene 2 auf und enthält vertikale Einstelleinrichtungen, wie Vertikalführung 351, Messtasterschlitten 352 Schlittenverstellzylinder 353, sowie einen Druckzylinder 364, mit dem das Übertragungselement 362 auf die Schienenoberseite 22 gepresst wird. Damit der Messtaster 36 störungsfrei die Unebenheiten im Längsprofil der Schiene 2 detektieren kann, ist dieser über den Messtasterschlitten 352 einstellbar im Messtastergehäuse 35 befestigt. Das Messtastergehäuse 35 ist starr mit dem Führungsprofil 31 verbunden. Dadurch wird eine hohe Steifigkeit der Gesamtkonstruktion des Messkopfes 3 erreicht.

Der Messtaster 36 besitzt einen Messstab 361. Dieser hat einen Gesamtweg von etwa sechs Millimetern. Der Messstab 361 liegt auf dem Übertragungselement 362 auf, um die Auslenkungsamplituden des Übertragungselements 362 auf den Messtaster 36 zu übertragen. Daher ist es notwendig den Messbereich des Messtasters 36 so einzustellen, dass der Messstab 361 in Nullposition (Übertragungselement 362 liegt mit seinem Verschleißstößel 363 auf der Schiene 2 auf, Messstab 361 berührt das Übertragungselement 362, Messwagen 1 ist im Stillstand) einen Weg von drei Millimetern sowohl nach oben als auch nach unten zurücklegen kann. Dieser Weg wird lediglich durch den Messstab 361 beschrieben. Der Messtasterschlitten 352 befindet sich durch einen ausgefahrenen vertikalen Schlittenverstellzylinder 353 in Anschlagposition.

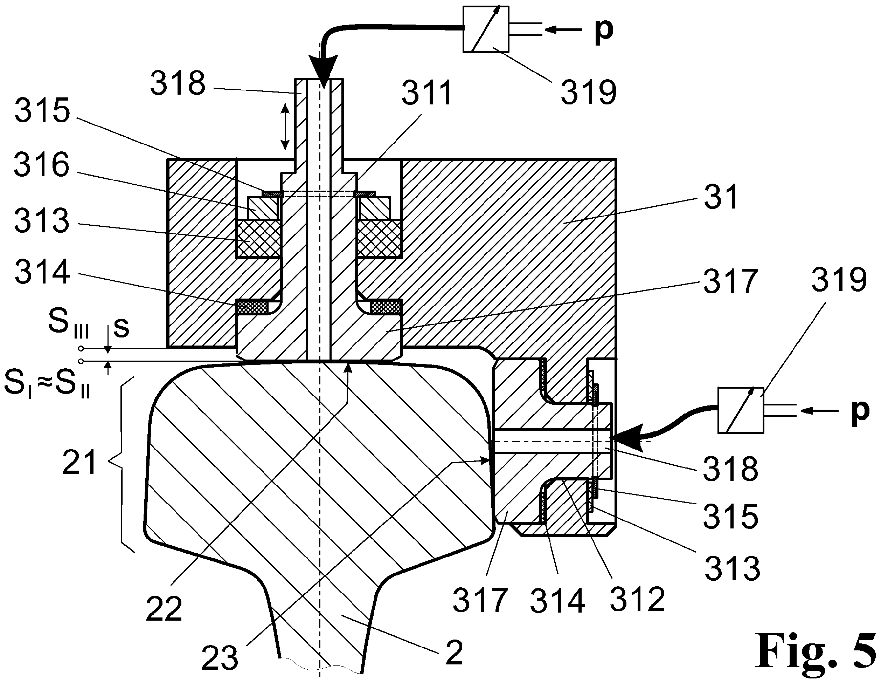

Das Führungsprofil 31 ist, wie in einer Schnittdarstellung in Fig. 5 dargestellt, mit einer Reihe von Gleitstößeln 311, 312 versehen. Hierbei gibt es Verschleißstücken für die Schienenoberseite 22 und für die Schieneninnenseiten 23. Das Führungsprofil 31 ist mit dem Messkopfgehäuse 35 für den Messtaster 36 mit Hilfe von Schweißteilen starr verbunden und ist über die Vertikalführungen 32 und Vertikallager 33 mit dem Messkopfrahmen 14 verbunden.

Im Weiteren soll anhand von Fig. 3 der Messkopf 3 und dessen vertikale Einstellung näher erläutert werden.

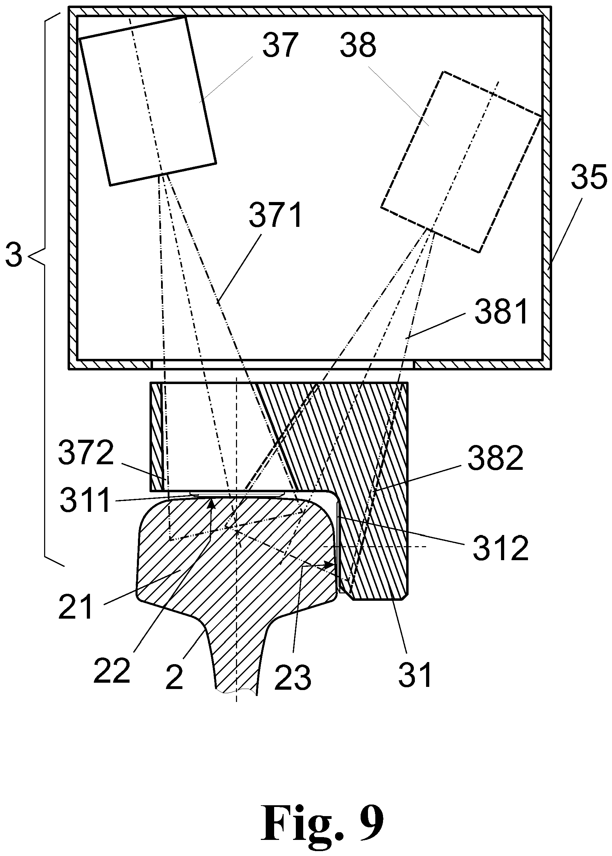

Der Messkopf 3 ist ein komplexes System, bestehend aus einer als L-Profil ausgebildeten Führungsprofilschiene (nachfolgend: Führungsprofil 31) und einem abstandsmessenden Sensor, der beispielsweise ein taktiler Messtaster 35 oder ein oder mehrere optische Messtaster 36, 37 (nur in Fig. 9 dargestellt) sein kann. Das Führungsprofil 31 bildet die Führungs- und Bezugsbasis für den Messtaster 35, indem es als L-Profil-Schiene mit einer definierten Länge (im Bereich 300 ... 1500 mm) ausgebildet ist, die - an Schienenoberseite 22 und Schieneninnenseite 23 gleichzeitig anliegend - den Messkopf 3 definiert führt. Als Material für das Führungsprofil 31 wird vorzugsweise ein Nichteisenmetall mit hoher Korrosionsbeständigkeit, beispielsweise Aluminium oder ein anderes Leichtmetall oder Legierungen davon, verwendet.

Der Messkopf 3 wird während eines Messvorgangs mittels des auf den Schienenoberseite 22 abrollenden Messwagens 1 horizontal entlang der Schiene 2 bewegt und gleitet mit einem horizontalen Schenkel des L-förmigen Führungsprofils 31 auf der Schienenoberseite 22 entlang, um ein Längsprofil der Schienenoberseite 22 aufzunehmen, während ein vertikaler Schenkel des Führungsprofils 31 einen Gleitvorgang an der Schieneninnenseite 23 des Schienenkopfes 21 ausführt. Ein Querschnitt des so an der Schiene 2 anliegenden Führungsprofils 31 ist in Fig. 5 dargestellt.

Die für die Schienenprofilmessung erforderliche vertikale Absenkbewegung des Messkopfes 3 wird in einer ersten Stufe bereits beim Eingleisen des Messwagens 1 mittels des Hubzylinders 61 erreicht und die zweite Stufe des Anpressens an die Schienenoberseite 22 erfolgt mittels zweier vertikaler Linearantriebe 34 (vorzugsweise in Form von vertikalen pneumatischen oder hydraulischen Fluidzylindern). In einem eingefahrenen Zustand der vertikalen Linearantriebe 34 befindet sich das Führungsprofil 31 in Ruheposition, d. h. der Messvorgang wird noch nicht gestartet. Beim Ausfahren der vertikalen Linearantriebe 34 wird das Führungsprofil 31 an die Schiene 2 angepresst und definiert so die Lage und Bezugsbasis für den Messtaster 36.

Die Vertikalbewegung des Messkopfes 3 ist in gleicher Weise wie in Fig. 3 nochmals in Fig. 4 dargestellt. Fig. 4 zeigt jedoch zusätzlich das Zusammenwirken des Messwagens 1 mit einer Schienenbearbeitungsmaschine (nur als Ankoppelpunkte dargestellt). Dazu ist eine geeignete Koppeleinrichtung 6 vorgesehen. Diese sichert, dass der Messwagen 1 nur im Bedarfsfall an einer gewünschten Arbeits- bzw. Messposition auf das Gleis abgesetzt werden kann, während er ansonsten ohne Kontakt zu den Schienen 2 mit der Bearbeitungsmaschine mitgeführt wird.

Zum Erreichen der vertikalen Arbeitsposition des Messwagens 1 auf den Schienen 2 wird durch vertikale Hubzylinder 61 das so genannte Eingleisen ermöglicht. Die Koppeleinrichtung 6 enthält vorzugsweise vier Hubzylinder 61, die pneumatisch oder hydraulisch betätigt werden, und ist zweckmäßig direkt an einer Bearbeitungsmaschine zur Schienenbearbeitung (z.B. Schienenschleif- oder Schienenstopfmaschine) angebracht. Das Eingleisen erfolgt ohne zusätzliche Führung, sodass der Messwagen 1 geringfügig schwenkbar ist und dadurch dem Gleisverlauf vor oder hinter der Bearbeitungsmaschine folgen kann.

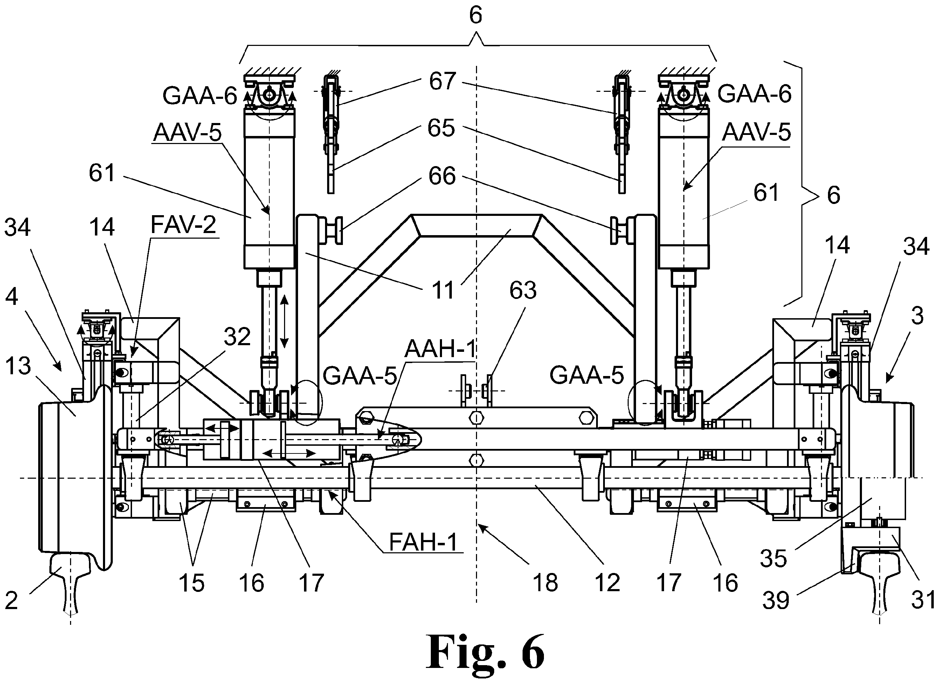

Die Hubzylinder 61 sind dabei nicht vollständig ausgefahren, da sie zusätzlich die relative Querbewegung des Messwagens 1 zur Mitte der Bearbeitungsmaschine bei Kurvenfahrt kompensieren müssen. Dazu sind diese - wie in Fig. 6 eingezeichnet - an der Bearbeitungsmaschine querbeweglich, d.h. um zu den Schienen 2 parallel ausgerichtete Gelenke GAA-6 drehbar, angebracht.

Während des Messeinsatzes (im eingegleisten Zustand des Messwagens 1) wird der Messwagen 1 mittels einer Kupplungsstange 62 hinter der Bearbeitungsmaschine gezogen oder die Kupplungsstange 62 wird als Schubgestänge genutzt, um den Messwagen 1 vor der Bearbeitungsmaschine herzuschieben. Dazu ist die Kupplungsstange 62 - wie in Fig. 4 gezeigt - in zwei Horizontallagern, einem Maschinenkupplungslager 63 der Schienenbearbeitungsmaschine und einem Messwagenkupplungslager 64 am Messwagen 1 geführt, damit das Ein- und Ausgleisen des Messwagens 1 mittels der Hubzylinder 61 ohne Probleme möglich ist. Da die Kupplungsstange 62 beim Ein- oder Ausgleisen des Messwagens 1 einen Kreisbogen um das Maschinenkupplungslager 63 ausführt, sind die Hubzylinder 61 am Tragrahmen 11 des Messwagens 1 längsbeweglich, d.h. um orthogonal zu den Schienen 2 ausgerichtete Gelenke GAA-5 (nur in Fig. 6 dargestellt) drehbar, angelenkt.

Nach der Benutzung des Messwagens 1 für die Schienenprofilerfassung wird dieser in eine Transportstellung gebracht, indem die vier Hubzylinder 61 vollständig eingefahren werden und eine Verriegelung/Arretierung zuschaltbar ist. Letztere erfolgt durch vier Verriegelungshaken 65, die paarweise gegensinnig in jeweils zwei am Tragrahmen 11 des Messwagens 1 angebrachte Sicherungszapfen 66 eingreifen und von mindestens zwei Verriegelungszylindern 67 angesteuert werden.

In Fig. 4 ist eine Variante gezeigt, in der je ein Verriegelungszylinder 67 pro Verriegelungshaken 65 vorhanden ist. Der dargestellte Zustand zeigt die eingefahrenen Verriegelungszylinder 67, sodass der entsprechende Verriegelungshaken 65 gelöst ist.

Bei ausgefahrenen Verriegelungszylindern 67 bewegen sich die Verriegelungshaken 65 auswärts, greifen in die Sicherungszapfen 66 ein und arretieren damit den Tragrahmen 11 des Messwagens 1 an der Bearbeitungsmaschine (nicht gezeichnet). Sind alle Verriegelungshaken 65 geschlossen, ist die Transportposition des Messwagens 1 erreicht und die Hubzylinder 61 werden drucklos geschaltet. Die Gewichtskraft des Messwagens 1 wird damit vollständig von den Verrieglungshaken 65 aufgenommen. Dadurch kann ein schadenfreier Transport gewährleistet werden, der vor allem die Messköpfe 3 schont und vor unnötigem Verschleiß schützt.

Die verschleißanfälligste, aber für die exakte Schienenprofilmessung wichtigste Komponente des Messwagens 1 stellt das Führungsprofil 31 des Messkopfes 3 dar. Deshalb sollte zur Erhaltung seiner einwandfreien Funktion auch dem unvermeidbaren Verschleiß während des Messvorgangs entgegengewirkt werden Die Verschleißreduzierung kann dabei auf zweierlei Art und Weise geschehen.

Zum einen ist es möglich, die am Schienenkopf 21 entlang gleitender Kontaktflächen des Führungsprofil 31 von unten und seitlich innen mit widerstandsfähigen Materialien wie Streifen aus Hartmetallen (z.B. Hardox-Stahl der Firma SSAB AB oder aus Wolfram) zu belegen. Der Nachteil hierbei wäre, dass diese Streifen lediglich als reine Verschleißschichten wirken, deren Abnutzung in der Profilmessung stets berücksichtigt werden muss.

Zum anderen sind aber noch verschleißärmere Gleitmechanismen einsetzbar, indem federnd gelagerte Stößel die Kontaktfläche des Führungsprofils 31 mit der Schiene 2 reduzieren und/oder eine Luftlagerung des Führungsprofils 31 gegenüber der Schiene 2 realisieren.

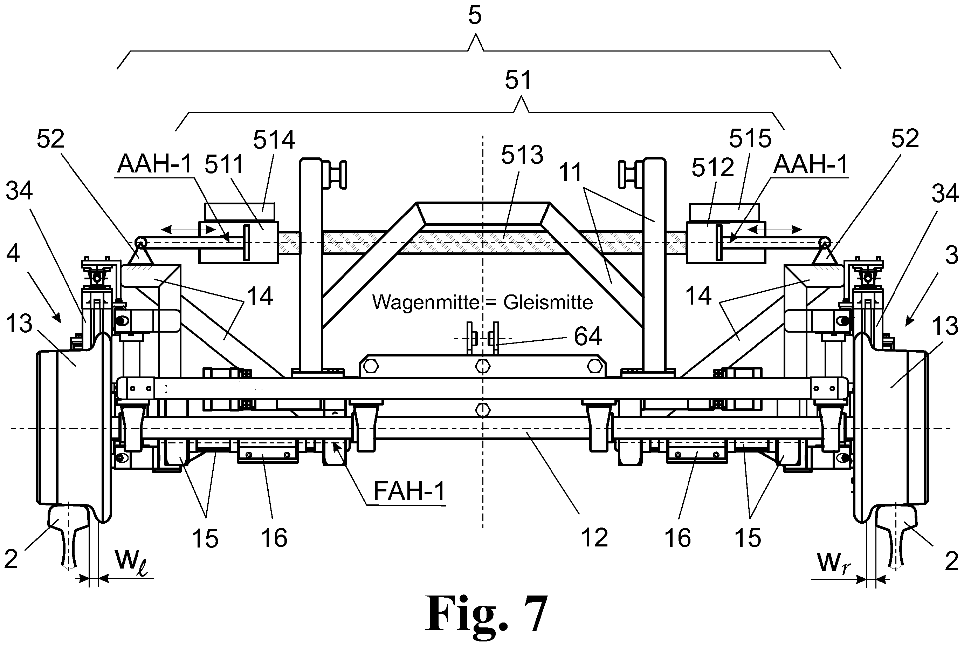

Als weitere Schutzmaßnahme für das Führungsprofil 31 sowohl beim Eingleisen als auch während des Messbetriebes (unter Rollbewegung des Messwagens 1) weist das Führungsprofil 31 an den vorderen und hinteren Enden Einlauffasen 39 (nur für den vertikalen Schenkel des Führungsprofils 31 in Fig. 4 - Seitenansicht - und in Fig. 6 - Frontalansicht - bezeichnet) auf. Dabei ist die Größe der Einlauffase 39 des vertikalen Schenkels, wie zu Fig. 7 noch genauer beschrieben wird, an das Spurkranzspiel w₀ der Radachsen 12 des Messwagens 1 angepasst und muss dieses aufgrund eines möglichen Verschleißzustandes des Gleises sogar überschreiten, um stumpfe Kollisionen des Führungsprofils 31 mit Schienenstößen im Gleis (z.B. im Bereich von Weichen) zu vermeiden.

In einer bevorzugten Realisierungsform ist das Führungsprofil 31 entlang der Schienenoberseite 22 mit einer Reihe von vertikalen Gleitstößeln 311 (nur in Fig. 5 sichtbar) und entlang der Schieneninnenseite 23 - wie aus Fig. 3 und 4 für den vertikalen Schenkel des L-förmigen Führungsprofils 31 ersichtlich - mit einer Reihe von horizontalen Gleitstößeln 312 versehen. Wie in Fig. 5 in einem vergrößerten Querschnitt dargestellt, bilden die vertikalen und horizontalen Gleitstößel 311 bzw. 312 entlang der Schiene 2 reduzierte Gleitflächen mit dem Schienenkopf 21, um während des Messvorgangs zur Erfassung des Längsprofils die Reibung und den Verschleiß zu minimieren.

Die vertikalen Gleitstößel 311 dienen dabei zusätzlich als mechanisches Filter für unterschiedliche Welligkeitsbereiche der Schienenoberseite 22. Dazu ist - je nach Messanforderung - eine Einstellung der Gleitstößel 311 in vertikaler Richtung möglich, wie weiter unten noch genauer erläutert wird.

Fig. 5 stellt in einer Schnittansicht einen Schienenkopf 21 und das anliegende Führungsprofil 31 mit einem vertikalen Gleitstößel 311 an der Schienenoberseite 22 und einem horizontalen Gleitstößel 312 an der Schieneninnenseite 23 dar. Die vertikalen Gleitstößel 311 sind als mechanische Filter für unterschiedliche Wellenlängen der Schienenwelligkeit an der Schienenoberseite 22 anzusehen. An der Schieneninnenseite 23 überwiegt die reine Verschleißschutzfunktion. Für beide Gleitstößel 311 und 312 ist es möglich, Keramik oder andere hochfeste Materialien (wie z. B. Hardox-Stahl oder Wolfram) zu verwenden. Bei Verwendung von Keramik haben die Gleitstößel 311 und 312 die dargestellte Form.

Die Gleitstößel 311 und 312 sind jeweils mit Dämpfungselementen 313 und 314 ausgestattet, wobei ein oberes Dämpfungselement 313 mit Orientierung von der Schiene 2 weg als Druckfeder gegen das Herausfahren des Gleitstößels 311 bzw. 312 angesehen werden kann und ein unteres Dämpfungselement 314 mit Orientierung zur Schiene 2 hin die Dämpfung des Gleitstößels 311 bzw. 312 zum Führungsprofil 31 realisiert. Beide Dämpfungselemente sind ringförmig ausgebildet. Dabei stützt das obere Dämpfungselement 313 den Gleitkopf 317 des Gleitstößels 311, 312 gegen einen Kragen in der Stößelausnehmung der Führungsschiene 31 ab. Das untere Dämpfungselement 314 spannt den jeweiligen Gleitstößel 311, 312 federnd ein, indem ein in einer Ringnut des Gleitstößels 311, 312 eingesetztes Sicherungselement 315 das untere Dämpfungselement 314 den Gleitstößel 311, 312 von außen gegen den Kragen der Stößelausnehmung der Führungsschiene 31 sichert und somit die Gleitstößel 311 und 312 im Führungsprofil 31 befestigt sind. Bei den Gleitstößeln 311 an der Schienenoberseite 22 wird eine zusätzliche Unterlage 316 zwischen dem oberen Dampfungselement 313 und dem Sicherungselement 315 verwendet, um die Dämpfungselemente 313 und 314 vorzuspannen und die Gleitstößel 311 spielfrei zu lagern und eine Höhendifferenz kompensieren zu können, die aus der zu erwartenden Welligkeit der Schienenoberseite 22 resultiert.

Die unteren Dämpfungselemente 314 sind dazu eingesetzt, um die Stöße, die das Führungsprofil 31 ohne die eingesetzten Gleitstößel 311 und 312 während des Messvorgangs erfahren würde, zu mildern. Weiterhin ist es möglich, die Höhe der Gleitstößel 311 durch Variieren der Dicken der Dämpfungselemente 313 und 314 einzustellen. Die Dicke des oberen Dämpfungselementes 313 ist größer als die des unteren Dämpfungselementes 314, während die Härte des oberen Dämpfungselementes 313 kleiner als die des unteren Dämpfungselements 314 ist.

Insbesondere bei den Gleitstößeln 311 an der Schienenoberseite 22 müssen die Dämpfungselemente 313 und 314 definiert ausgewählt und eingestellt werden. Das untere Dämpfungselement 314 ist härter als das obere Dämpfungselement 313 eingestellt, da der Federweg bei Stößen von unten nicht zu groß sein darf. Dementsprechend ist das obere Dämpfungselement 313 weicher und dicker zu wählen, damit wird bei Krafteinwirkung von oben der Sicherungsring 315 die Ringnut im Gleitstößel 311 nicht überlastet und keine Materialschädigung oder -zerstörung erfolgt. Zudem dient das obere Dämpfungselement 313 generell zur Stabilisierung der Gleitstößel 311, 312 und bei den Gleitstößeln 311 auch zusätzlich zur Vorspannung.

Wie bereits oben erwähnt, sind die Gleitstößel 311 dazu bestimmt, Stöße zu dämpfen, und dienen auf der Schienenoberseite 22 als mechanisches Filter für unterschiedliche Wellenbereiche des Schienenprofils. Dafür ist es sinnvoll, die Höhe der Gleitstößel 311 in Bezug auf die Auflagefläche des Führungsprofils 31 zu variieren.

Sind grobe Wellenbereiche auf der Schiene 2 zu erwarten und zu vermessen, ist der Gleitstößel 311 "ausgefahren", d.h. er steht mit seiner kreisförmigen Gleitkopf 317 aus dem Führungsprofil 31 hervor, sodass sich eine annähernd punktförmige Auflage auf den Schienenoberseite 22 ergibt. Dies entspricht der durch die Dämpfungselemente 313 und 314, die Unterlage 316 und den Sicherungsring 315 voreingestellten "Normallage" der Gleitstößel 311.

Sollen feine Wellenbereiche auf der Schiene 2 vermessen werden, ist eine eindeutige lineare Auflage erforderlich, bei der Führungsprofil 31 und Gleitköpfe 317 der Gleitstößel 311 die gleiche Höhe zur Schienenoberseite 22 haben. Das heißt, die Gleitstößel 311 müssen "eingefahren" werden. Dies geschieht durch vertikalen Druck auf das Führungsprofil 31, sodass das untere Dämpfungselement 314 zusammengepresst und das obere Dämpfungselement 313 und die Unterlage 316 entlastet werden. Dadurch entsteht bei den vorgenannten Schienenbereichen eine höhere Auflösung.

In Fig. 5 sind für einen der vertikalen Gleitstößel 311 der Arbeitsweg s und mit S_{I}, S_{II} und S_{III} jeweils einnehmbare Zustände dargestellt, die die Innenfläche des Führungsprofils 31 gegenüber dem Gleitkopf 317 des Gleitstößels 311 einnimmt.

Der erste Zustand S_{I} beschreibt den Gleichgewichtszustand zwischen den beiden Dämpfungselementen 313, 314 im noch nicht aufgesetzten Zustand des Führungsprofils 31 (Ruheposition). Im Zustand S_{II} liegen die Gleitstößel 311 auf der Schienenoberseite 22 auf, ohne dass ein Anpressen des Führungsprofils 31 entlang der vertikalen Antriebsachsen AAV-3 erfolgt. Diese Lage wird hier bezeichnet als Gleichgewichtsbedingung zwischen den Dämpfungselementen 313, 314 und der Gewichtskraft des Messkopfes 3. Beim Aufsetzten des Messkopfes 3 auf die Schienenoberseite 22 kommt es zu keiner nennenswerten Bewegung der Gleitstößel 311, weil die Dämpfungselemente 313, 314 durch die Materialwahl und Vorspannung entsprechend so eingestellt sind, dass die Bedingung S_{I} ≈ S_{II}, S_{I} ≤ S_{II} erfüllt ist.

Ist ein maximales Anpressen des Messkopfes 3 durch die vertikalen Linearantriebe 34 entlang der vertikalen Antriebsachsen AAV-3 erfolgt, dann haben die Gleitstößel 311 nahezu das gleiche Niveau wie das Führungsprofil 31 und der Zustand S_{III} ist erreicht. Der Spielraum von S_{II} zu S_{III} hängt ab vom Zustand des Längsprofils der Schienenoberseite 22 und von den Toleranzen des Messkopfes 3.

Der Arbeitsbereich der vertikalen Gleitstößel 311 wird bewirkt durch eine Stauchung der unteren Dämpfungselemente 314 und eine Entlastung der vorgespannten oberen Dämpfungselemente 313. Der maximale Arbeitsweg s der vollständig eingepressten Gleitstößel 311 ist nur ein theoretischer Arbeitsbereich der Gleitstößel 311.

Tatsächlich wird der Arbeitsweg s der Gleitstößel 311 im angepressten Zustand für die Profilmessung stets geringer ausfallen, um das Führungsprofil 31 auf der Schienenoberseite 22 schwimmend zu lagern. Dadurch wird das Führungsprofil 31 in einem vibrationsarmen und stabilen Zustand gegenüber der Schienenoberseite 22 gehalten und dient somit als Bezugsniveau für den verwendeten Messtaster 36, 37 und/oder 38.

In Fig. 5 ist weiterhin dargestellt, dass die Gleitstößel 311 und 312 jeweils eine zentrale Bohrung 318 aufweisen, die für den möglichen Anschluss einer Fluidzuführung 319 zur Erzeugung eines Gasdruckkissens am Gleitkopf 317 jedes einzelnen Gleitstößels 311 und 312 vorgesehen ist. Damit kann der Verschleiß nochmals um ein Vielfaches verringert werden. Die schematische Darstellung der Fluidzuführung 319 verdeutlicht die prinzipielle Art und Weise, jeden vertikalen und jeden horizontalen Gleitstößel 311 bzw. 312 mit einem Druckgas (vorzugsweise Luft unter einem Druck p) zu verbinden. Dadurch kann permanent oder pulsartig Gas durch jeden Gleitstößel 311 bzw. 312 gepumpt und zwischen dem Gleitkopf 317 und der Schienenoberseite 22 bzw. der Schieneninnenseite ein Luftkissen erzeugt werden. Im Ergebnis der Druckgaszufuhr entstehen einerseits von Staub befreite Oberflächen der Schienen 2 und andererseits ein Luftpolster, das den Gleitvorgang des Führungsprofils 31 definiert verbessert, den Messvorgang unterstützt und eine durch Fremdeinflüsse (Vibration, Kontamination etc.) mögliche Verfälschung der Messergebnisse minimiert.

Nachfolgend soll noch genauer auf die Realisierung des Messkopfes 3 eingegangen und dessen Arbeitsweise erläutert werden.

In einer bevorzugten rein mechanischen Variante des Messkopfes 3 - wie er in drei verschiedenen Ansichten in Fig. 8 dargestellt ist - enthält dieser in einem mit dem Führungsprofil 31 starr verbundenen Messkopfgehäuse 35 einen linearen Messtaster 36 mit (vertikal) eindimensional beweglichem Messstab 361, wobei der Messstab 361 während der Bewegung entlang eines Messabschnitts der Schiene 2 mittels eines Übertragungselements 362, das als ein Höhenumsetzer fungiert, auf und ab bewegt wird und dabei die Riffeltiefen der Schiene 2 (Welligkeit der Schienenoberseite 22) detektiert.

Fig. 8 zeigt drei Ansichten des Messkopfes 3 mit dem taktilen Messtaster 36, wobei das Messkopfgehäuse 35 mit einer Vertikalführung 351 für den Messtaster 36 und - zur Wahrung der Übersichtlichkeit - ohne das zugehörige Führungsprofil 31, das unten am Messkopfgehäuse 35 angebracht wäre, dargestellt ist.

In der linken Teilzeichnung ist der Messkopf 3 in einer Perspektivansicht im Überblick dargestellt. Die mittlere Frontansicht zeigt das Messkopfgehäuse 35 mit einer zweizügigen Vertikalführung 351, an der ein Messtasterschlitten 352 vertikal geführt wird. Der Messtasterschlitten 352 trägt den taktilen Messtaster 36, der hier beispielhaft als kommerziell verfügbarer Messtaster (Modell DK812R5 (mit Adapter) der Fa. Vogel & Plötscher GmbH & Co. KG, Breisach, DE) abgebildet ist, und ermöglicht die vertikale Justierung des Messtasters 36 gegenüber der Schienenoberseite 22, um den Messstab 361 des Messtasters 36 in seinem verfügbaren Messbereich möglichst mittig anzusprechen. Dabei setzt der Messstab 361 jedoch nicht direkt auf der Schienenoberseite 22 auf, sondern steht über ein Übertragungselement 362 mit der Schienenoberseite 22 in Kontakt.

Das Übertragungselement 362 ist als einseitiger Hebel um eine horizontale Drehführungsachse GFA-4-3 ausgebildet, wobei das andere Ende nur in einem bestimmten Bereich vertikal auf und ab bewegt werden kann. Dazwischen befindet sich an der Oberseite des Übertragungselements 362 der Aufsetzpunkt des Messstabes 361 und gegenüberliegend an der Unterseite ein wechselbarer Verschleißstößel 363, der direkt auf der Schienenoberseite 22 aufliegt und im Fahrbetrieb des Messwagens 1 auf dieser entlang gleitet. Dadurch werden zum einen jeder Riffel der Schienenoberseite 22 punktgenau mit dem Übertragungselement 362 entlang der Schiene 2 nachgefahren und der Verschleiß des Übertragungselements 362 kontrollierbar begrenzt und zum anderen der Verschleiß des Messstabes 361 am Messtaster 36 sowie dessen laterale Vibration völlig unterbunden.

Mit der Zustellung des gesamten Messkopfes 3 zusammen mit dem Messtaster 36 und dem Führungsprofil 31 durch die vertikalen Linearantriebe 34 wird das Übertragungselement 362 als Kopplungsglied zwischen Schiene 2 und Messstab 361 des Messtasters 36 ebenfalls auf die Schienenoberseite 22 zugestellt. Das Übertragungselement 362 ist als Hebel mit seiner horizontalen Drehführungsachse GFA-4-3 drehbar am Führungsprofil 31 - fixiert zum Messkopfgehäuse 35 - befestigt und wird an seinem freien Hebelende von einem zusätzlichen vertikalen Druckzylinder 364, der sowohl am Übertragungselement 362 als auch am Messkopfgehäuse 35 drehbar angelenkt ist, in Richtung der Schiene 2 druckbeaufschlagt. Dadurch wird beim Messvorgang das Übertragungselement 362 mit dem Verschleißstößel 363, der in einem mittleren Bereich der Hebellänge an der Unterseite des Übertragungselements 362 angeordnet ist, auf die Schiene 2 gepresst und die Unebenheiten von der Schienenoberseite 22 an den Messstab 361 des Messtasters 36 übertragen.

Durch das Anpressen des Verschleißstößels 363 des Übertragungselements 362 auf die Schienenoberseite 22 kann der Messtaster 36 an der dem Verschleißstößel 363 gegenüberliegenden Seite verschleißfrei und störungsfrei die Unebenheiten der Schiene 2 messen. Dabei wird das Übertragungselement 362 durch den vertikalen Druckzylinder 364 mit höherem Anpressdruck beaufschlagt als der taktile Messtaster 36 herkömmlich den Messstab 361 gegen eine Messfläche drückt, damit das Übertragungselement 262 jede Welle (bzw. jeden Riffel) nachfährt, sodass die Unebenheiten der Schiene 2 über die Bewegung des Übertragungselements 362 sogar mit verbesserter Auflösung und weitestgehend von Schwingungen infolge der Welligkeit des Schienenoberseite 22 entkoppelt auf den Messstab 361 des Messtasters 36 übertragen werden.

Der Messtaster 36 ist in einer festen Position gegenüber dem Messkopfgehäuse 35 (und somit zum Führungsprofil 31) fixiert, wobei er - gemäß der mittleren Darstellung von Fig. 8 - innerhalb des Messkopfgehäuses 35 an einer Vertikalführung 351 mittels eines Messtasterschlittens 352 entlang der Führungsachse FAV-4-1 vertikal beweglich angebracht ist.

In der rechten Darstellung von Fig. 8 ist der Messkopf 3 in einer Seitenansicht gezeigt, die erkennen lässt, wie der innerhalb des Messkopfgehäuses 35 entlang einer Vertikalführung 351 bewegliche Messtasterschlitten 352 einstellbar ist. Für diesen Zweck ist an dem Messkopfgehäuse 35 ein Messtasterverstellzylinder 353 vorhanden, der mit seinem oberen Ende oben am Messkopfgehäuse 35 (hier an der zur Messwagenmitte gewandten Außenseite des Messkopfgehäuses 35) angekoppelt und mit seinem unteren Ende an einem Zapfen des Messtasterschlittens 352 angelenkt ist, der vorzugsweise durch einen Schlitz in der Rückwand aus dem Messkopfgehäuse 35 auskragt.

Die Einstellung der vertikalen Höhe des Messtasters 36 erfolgt damit entlang einer vertikalen Führungsachse FAV-3 des Messtasterschlittens 352 über dessen rückseitig auskragenden Zapfen an dem entlang einer vertikalen Antriebsachse AAV-3 der Messtastervertikalzylinder 353 angelenkt ist, wie es die rechte Darstellung von Fig. 8 in einer Seitenansicht zeigt.

Somit ist der Messtaster 36 auf eine mittlere Stellung des Messstabes 361 einstellbar, wenn bei auf der Schiene 2 aufgesetztem Führungsprofil 31 des Messkopfes 3 das Übertragungselement 362 auf der Schienenoberseite 22 aufliegt, jedoch noch nicht mit dem Druckzylinder 364 angepresst wird. Während des Messvorgangs ist der Messtaster 36 dann starr gegenüber dem Messkopfgehäuse 35 und Führungsprofil 31 arretiert und führt - mit Bezug auf das Führungsprofil 31 - auf dem Schienenkopf 21 eine reine Abstandsmessung aus, die eine Höhenmessung der Schienenoberseite 22 darstellt und bei bewegtem Messwagen 1 als so genanntes Längsprofil der Schiene 2 aufgenommen wird.

Der taktile Messtaster 36 ist also - trotz seines mechanischen Messprinzips - ein verschleißfreier Detektor für die vertikalen Unebenheiten entlang der Schienenoberseite 22, indem das Übertragungselement 362 mit dem Verschleißstößel 363 als vorgelagertem Verschleißteil vor dem Messstab 361 des Messtasters 36 ausgebildet ist und somit zwischen Schiene 2 und Messtaster 36 sowohl als Kopplungsglied (für die Übertragung von Abstandsänderungen gegenüber dem Führungsprofil 31 des Messkopfes 3) als auch als Entkopplungsglied (von Störungen infolge der Bewegung entlang der Schiene 2, wie Vibrationen und Verschleiß des Verschleißstößels 363) dient. Geeignet ist jeder beliebige abstandsempfindliche Sensor, soweit er als eindimensionaler Messfühler die Unebenheiten im Längsprofil einer Schiene 2 mit ausreichender vertikaler Auflösung im Bereich von 2 bis 5 mm und von Unebenheiten entlang des Verlaufs der Schiene 2 mit einer longitudinalen Auflösung in einem Wellenlängenbereich zwischen 10 und 1000mm zuverlässig erfassen kann. Die Erfassung von Unebenheiten in longitudinaler Richtung ist dabei auch von der Länge des Führungsprofils 31 abhängig. Das Führungsprofil ist dazu stets in einer Länge ausgelegt, die größer als die größte auflösbare Wellenlänge ist. Der taktile mechanische Messtaster 36 kann alternativ ebenso ein berührungslos elektrisch, magnetisch oder optisch messender Sensor mit entsprechender Auflösung sein.

Eine Ausführung des Messkopfes 3 mit optischen Sensoren ist in Fig. 9 gezeigt. Dabei ist in einem Messkopfgehäuse 35 ähnlicher Form und Anordnung, wie in den vorhergehenden Zeichnungen gezeigt, und mit derselben starren Verbindung zum Führungsprofil 31 mindestens ein optischer Messtaster 37 so angeordnet, dass dieser die Schienenoberseite 22 streifenförmig quer zur Richtung der Schiene 2 abtastet. Dabei können alle die Einstellelemente, die vorstehend für die Höheneinstellung eines taktilen Messtasters 36 innerhalb des Messkopfgehäuses 35 (wie Messtasterschlitten 352, Vertikalführung 351, Schlittenverstellzylinder 353 sowie Übertragungselement 362 und dessen Druckzylinder 364) beschrieben wurden, entfallen. Für den optischen Messtaster 37 ist lediglich in einem Bereich des Führungsprofils 31, in dem keine Gleitstößel 311, 312 angeordnet sind, eine entsprechende Öffnung 372 vorzusehen, durch die die Abtastung der Schienenoberseite 22 mittels des optischen Messtasterbündels 371 erfolgen kann.

Optional wird ein zweiter optischer Messtaster 38 verwendet, der sowohl wesentliche Teile der Schienenoberseite 22 als auch der Schieneninnenseite 23 abtastet. Dieser ist mit einem optischen Messtasterbündel 381 über eine weitere angepasste Öffnung 382 im Führungsprofil 31, die längs und quer zur Schiene 2 und versetzt zur Öffnung 372 eingearbeitet ist, unter einem solchen Winkel zum Schienenkopf 21 auf die Schiene 2 gerichtet ist, dass das optische Messtasterbündel 381 sowohl wesentliche Teile der Schienenoberseite 22 als auch der Schieneninnenseite 23 abtastet. Dadurch entsteht durch Redundanzmessungen auf der Schienenoberseite 22 eine höhere Zuverlässigkeit der Messung und es kann zusätzlich eine Messung der Welligkeit an der Schieneninnenseite 23 erfasst werden.

Die Sequenz von aufeinanderfolgenden Messpunkten wird infolge der Fortbewegung des Messwagens 1 entlang der Schiene 2 als fortlaufendes Längsprofil aufgenommen. Mithin arbeitet die Messtaster 36, 37 und/oder 38 als zweidimensionales Messsystem, wobei die dritte Dimension (als Abweichung der Schieneninnenseiten 23 von der vorgeschriebenen Spurweite des Gleises) wie folgt erfasst wird.

Nach der vorangegangenen Beschreibung der Komponenten der Messanordnung zur Erfassung des Schienenprofils wird nachfolgend für den Messwagen 1 beschrieben, wie die Messanordnung in Arbeitsposition gebracht und der Messvorgang vorgenommen wird. Es wird nachfolgend davon ausgegangen, dass der Messwagen 1 - ohne Beschränkung der Allgemeinheit - an eine Bearbeitungsmaschine (z.B. eine Schienenschleifmaschine) angekoppelt ist, um die Messung online, d.h. im direkten Zusammenwirken mit der Bearbeitungsmaschine vor und nach der Bearbeitung der Schienen, durchzuführen.

Zunächst fährt die Bearbeitungsmaschine mit dem mitgeführten Messwagen 1 zu dem zu bearbeitenden Gleisabschnitt. Dort wird der Messwagen 1 an einem Startpunkt durch eine Eingleisvorrichtung vertikal mittels der Hubzylinder 61 abgesenkt und in das Gleis eingesetzt. Anschließend werden die Führungsprofile 31, 41 an jeder Gleisseite durch Betätigung der vertikalen Linearantriebe 34 für die Messköpfe 3, 4 auf die Schiene 2 abgesenkt und durch die Bewegung des Messkopfrahmens 14 in horizontaler Richtung gegen die Schieneninnenseite 23 gepresst. Damit befindet sich das Führungsprofil 31 in einer Zwangsposition und wird somit durch den Verlauf des Gleises geführt und in ständigem Kontakt mit beiden Schienen 2 gehalten. Danach erfolgt die Absenkung und Justierung der Messtaster 36, 37 und/oder 38, je nachdem welche am Messwagen 1 am Messkopf 3 montiert sind.

In der Ausführung des Messkopfes 3 mit taktilem Messtaster 36 gemäß Fig. 8 wird vor dem Absenken des Messtasters 36 zunächst das Übertragungselement 362 abgesenkt und gegen die Schienenoberseite 22 gepresst, bevor der Messtaster 36 bis zu einer Position abgesenkt wird, in der der Messstab 363 auf die Mitte seines Messbereichs eingestellt ist. Danach kann der Messvorgang beginnen, indem der Messwagen 1 entlang der Schienen 2 gezogen oder geschoben wird, wobei das Längsprofil des Schienenkopfes 21 bezüglich der Schienenoberseite 22 und gegebenenfalls der Schieneninnenseite 23 aufgezeichnet wird.

Dabei erfolgt die Quermessung des Schienenprofils im Normalfall als reine Abstandsmessung zwischen beiden Schienen 2 des Gleises. Sie kann aber auch zusätzlich als Längsprofil mit einem zum Messtaster 36 um 90° versetzten Messtaster (nicht gezeichnet) ausgerüstet sein, wenn dies aufgrund erhöhter Verscheißbedingungen des Gleises erforderlich sein sollte.

Gemäß Fig. 4 sind für das Eingleisen des Messwagens 1 Hubzylinder 61 fest mit der Schienenbearbeitungsmaschine (nur als Gelenkaufnahmepunkte dargestellt) verbunden und es wird zusätzlich eine Zug- bzw. Schubvorrichtung in Form einer Kupplungsstange 62 vorgesehen. Je nach Fahrtrichtung der Bearbeitungsmaschine wird dann der Messwagen 1 gezogen oder geschoben. In Transportposition sind die Hubzylinder 61 eingefahren und vier Verriegelungshaken 65 um zugehörig am Tragrahmen 11 des Messwagens 1 befindliche Sicherungszapfen 66 geschlossen und die Verriegelungszylinder 67 ausgefahren. Die Last des Messwagens 1 liegt hierbei nur in den Verriegelungshaken 65, sodass ein sicherer Transport gewährleistet ist.

Grundsätzlich wird die Abweichung vom vorgeschriebenen Schienenquerprofil der Schienen 2 eines Gleises mittels horizontaler Linearantriebe 17 und mittels vertikaler Linearantriebe 34 durch druckgesteuerte Zustellung kompensiert.

Fig. 6 zeigt den Messwagen 1 in einer Frontansicht in Messbereitschaft auf den Schienen 2 an einem gewünschten Einsatzort im Gleis.

In Arbeitsposition (Messvorgang noch nicht gestartet) haben die Räder 13 des Messwagens 1 vertikalen Kontakt mit der Schiene 2 erhalten, weil die Hubzylinder 61 entsprechend ausgefahren wurden. Zur Einleitung des Messvorgangs werden die Messköpfe 3 und 4, geführt durch ihre in entgegengesetzter Richtung horizontal beweglichen Messkopfrahmen 14, mittels horizontaler Linearantriebe 17 an die Schieneninnenseiten 23 bewegt und innerhalb der Messkopfrahmen 14 mittels vertikaler Linearantriebe 34 zusammen mit den Führungsschienen 31, 41 auf die Schienenoberseiten 22 gepresst.

Eine erste Variante hinsichtlich der Spureinstellung und Querprofilmessung zeigt Fig. 6. Der Wagen befindet sich in einer Frontansicht auf zwei Schienen 2. Die Spureinstellung erfolgt in diesem Beispiel durch paarweise angeordnete horizontale Linearantriebe 17, die jeweils eines von zwei am Messwagen 1 vorhandenen Spureinstellpaketen bilden. Die räumliche Anordnung der zwei Spureinstellpakete innerhalb des Messwagens 1 ist in Fig. 1 erkennbar.

Wie im Beispiel von Fig. 6 gezeigt, besteht ein Spureinstellpaket aus paarweise von der Mitte des Messwagens 1 horizontal nach außen gerichteten Linearantrieben 17, die jeweils aus zwei in Reihe geschalteten Fluidzylindern unterschiedlichen Hubes als erste und zweite Horizontalzylinder 171 bzw. 172 zusammengesetzt sind. Der unterschiedliche Hub wurde bereits in den Erläuterungen zu Fig. 2 beschrieben.

Sind beide Horizontalzylinder 171 und 172 eingefahren, so befinden sich die Messköpfe 3, 4 in Ausgangsposition, d. h. der Messwagen 1 könnte noch einen bestimmten Weg bis zum Startpunkt einer Messung zurücklegen. Von den vier horizontalen Linearantrieben 17 werden jeweils die ersten Horizontalzylinder 171 (mit geringerem Hub) zuerst ausgefahren. Dabei wird die Sollspurweite (z.B. 1435 mm) als Abstand der vertikalen Schenkelinnenseiten der L-förmigen Führungsprofile 31, 41 beider Messköpfe 3, 4 zwischen den Schienenköpfen 21 lediglich annähernd (mit Minustoleranz) eingestellt.

Zur exakten Einstellung der Sollspurweite können die zweiten Horizontalzylinder 172 über ein eingebautes Längenmesssystem (z.B. Systeme DNCl oder DNCM von Festo AG & Co. KG) verfügen. Dieser Zustand ("Spur halten") wird dann blockiert, sodass beim Durchfahren einer Weiche keine Schäden auftreten.

Wenn anschließend in jedem Spureinstellpaket jeweils die zwei zweiten Horizontalzylinder 172 (mit größerem Hub) ausgefahren werden, erfolgt das Anpressen der Führungsprofile 31 und 41 an die gegenüberliegenden Schieneninnenseiten 23 zum Zwecke des Messvorgangs. Die paarweise symmetrische Anordnung der ersten und zweiten Horizontalzylinder 171 bzw. 172 gegenüber der Messwagenmitte definiert die Wagenmitte gleichzeitig als Bezugsbasis 18 für die Querprofilmessung zwischen den Schieneninnenseiten 23 im Gleis und sichert die permanente Übereinstimmung der Messwagenmitte mit der Gleismitte. Diese Einstellung sichert eine sehr genaue Messung des Profils der Schieneninnenseiten 23 und der Spurweitenabweichungen.

Fig. 7 stellt eine zweite Variante hinsichtlich der Spureinstellung und -messung in einer Frontansicht des Messwagens 1 dar. Hierbei werden Gleismitte und Mitte des Messwagens 1 einfach gleichgesetzt und es gibt keine Bezugsbasis 18, wie sie in Fig. 6 als definierte feste Abstützung am Tragrahmen 11 bei der horizontalen Antriebsbewegung der Messköpfe 3 und 4 entlang der horizontalen Antriebsachsen AAH-1 körperlich vorhanden war.

Die beiden Messköpfe 3 und 4 sind bei dieser Variante (wie in den vorherigen Beispielen) mittels der Messkopfrahmen 14 quer zu den Schienen 2 und zueinander verschiebbar am Messwagen 1 angebracht, aber hier - gemäß der Ausführung von Fig. 7 - antriebstechnisch (entlang zweier horizontaler Antriebsachsen AAH-1) direkt über eine Messkopfkopplungseinheit 5 miteinander verbunden.

Die vier horizontalen Linearantriebe 17, wie sie in den Figuren 1 bis 6 mit dem Traggestell 11 des Messwagens 1 vorhanden waren, entfallen bei der Ausführung von Fig. 7, während jedoch die Horizontalführungen 15 und Horizontallager 16 für jeden Messkopfrahmen 14 in gleicher Weise wie vorher erhalten bleiben.

In diesem Beispiel realisiert die Messkopfkopplungseinheit 5 mit zwei vereinfachten Spurpaketen 51, die sich parallel zueinander zwischen den Messkopfrahmen 14 der beiden Messköpfe 3 und 4 teleskopartig ausschieben lassen, die Spureinstellung beim Eingleisen des Messwagens 1 sowie beim Anpressen der Messköpfe 3 und 4 für den Messvorgang.

Wie gemäß Fig. 7 lediglich für eine von zwei Antriebsachsen AAH-1 sichtbar - ist bei dieser Ausführung der Spureinstellung der Messköpfe 3 und 4 das vereinfachte Spurpaket 51 ein aus linkem Spurzylinder 511 und rechtem Spurzylinder 512 sowie einer dazwischen befindlichen Spurstange 513 zusammengesetztes Fluid-Getriebe, das die Funktion des horizontalen Ausfahrens der Führungsprofile 31 und 41 der Messköpfe 3, 4 gegen die Schieneninnenseiten 23 bewirkt. Die bezüglich der Fahrtrichtung des Messwagens 1 symmetrisch angeordneten und mittels Auflagern 52 an den Messkopfrahmen 14 befestigten Spurpakete 51 sind jeweils so beschaffen, dass sich die Kolben von linkem und rechtem Spurzylinder 511 bzw. 512 gegenläufig zueinander bewegen. Dabei ergeben sich drei Einstellungen:

Sind beide Spurzylinder 511 und 512 eingefahren, so befindet sich - weil beide Messkopfrahmen 14 auf Anschlag eingezogen sind - die Mitte der Spurstange 513 automatisch in der Messwagenmitte und stimmt (ausschließlich in dieser Stellung) tatsächlich mit der Bezugsbasis 18 aus den vorigen Ausführungsbeispielen überein.

Ist der linke Spurzylinder 511 eingefahren und der rechte Spurzylinder 512 ausgefahren (oder umgekehrt), so befinden sich die beiden Messköpfe 3, 4 in einer Ausgangsstellung, die der Voreinstellung zur Sollspurweite des Gleises dient, aber noch keinen Kontakt der Führungsprofile 31, 41 zu den Schieneninnenseiten 23 herstellt (z.B. für das Eingleisen des Messwagens 1). Dabei stimmt die Mitte der Spurstange 513 in der Regel nicht mehr exakt mit der Mitte des Messwagens 1 überein.

Sind beide Spurzylinder 511 und 512 ausgefahren, werden die Messköpfe 3, 4 mit den vertikalen Schenkeln der Führungsprofile 31, 41 gegen die Schieneninnenseiten 23 gepresst. Das Spurpaket 51 nimmt hierbei die Funktion eines Stoßdämpfers an, sodass Vibrationen und Stöße abgemildert werden können. Dadurch wird auch eine sichere Kurvenfahrt gewährleistet.

Diese Art des teleskopartigen Horizontalantriebs der Messkopfrahmen 14 entlang der zwei durchgängigen Antriebsachsen AAH-1 hat gegenüber der Variante gemäß Fig. 6 den Vorteil, dass die Spuranpassung mit der halben Anzahl von Spurzylindern 511, 512 gegenüber der Zahl von acht Fluidzylindern der horizontalen Linearantriebe 17 bei den Ausführungen gemäß Fig. 2 und Fig. 6 auskommt.

Des Weiteren kann eine direkte Querprofilmessung zwischen den beiden Schieneninnenseiten 23 des Gleises erfolgen. Dazu sind im einfachsten Fall je Spurpaket 51 die zwei Spurzylinder 511 und 512 als Fluidzylinder mit integriertem Wegmesssystem 514, 515 ausgebildet, sodass für beide Spurpakete 51 gemäß der Ausführung von Fig. 7 insgesamt höchstens vier Wegmesssysteme 514, 515 benötigt werden. Die Zahl der Wegmesssysteme 514, 515 kann auch noch auf ein Wegmesssystem 514 je Spurpaket 51 verringert werden, wenn für jedes Spurpaket 51 ein mit einem integrierten Wegmesssystem 514 versehener kompakter Linearantrieb eingesetzt wird, der zwei direkt verbundene Spurzylinder 511, 512 aufweist (nicht gezeichnet, aber äquivalent zu den in den vorigen Beispielen verwendeten horizontalen Linearantriebe 17 mit den Horizontalzylindern 171, 172 ausgeführt) und der an einem Ende der Spurstange 513 oder in der Mitte einer geteilten Spurstange 513 als Doppelzylinder (nicht gezeigt) angebracht ist.

In der letztgenannten Variante mit einer geteilten Spurstange 513 wäre dann optional auch noch eine starre Befestigung der kompakt gekoppelten Spurzylinder 511, 512 am Tragrahmen 11 des Messwagens 1 möglich, wobei die Spurzylinder 511 und 512 dann jedoch stufenweise ausfahrbar sein müssten.

Weiterhin ist in Fig. 7 zwischen dem Spurkranz der Räder 13 und den Schienen 2 ein linkes Spurkranzspiel w_{ℓ} und ein rechtes Spurkranzspiel w*ᵣ* dargestellt, wobei links bzw. rechts durch die Fahrtrichtung des Messwagens 1 definiert werden. An dieser Darstellung soll die zu Fig. 4 erläuterte Größe der Einlauffase 39 des Führungsprofils 31 hergeleitet werden.

Wird von einem Normmaß w₀ (nicht dargestellt) ausgegangen, mit dem das linke und das rechte Spurkranzspiel w_{ℓ} und w*ᵣ* des Messwagens 1 vorgegeben wird, wenn letzterer idealer Weise symmetrisch auf einem Gleis im idealen Gleiszustand aufgesetzt ist, so ist die Summe aus w_{ℓ} und w*ᵣ* gleich 2 w₀. Infolge des Verschleißes der Schienenköpfe 21 an der Schieneninnenseite 23 sind w_{ℓ} und w*ᵣ* jedoch regelmäßig größer und beim Abrollen des Messwagens 1 in der Regel nicht gleich groß. Außerdem können - bei der in Fig. 7 gegenüber Fig. 6 entfallenden Bezugsbasis 18 - das linke und rechte Spurkranzprofil w_{ℓ} und w*ᵣ* nicht separat gegenüber der Gleismitte eingestellt werden, sodass das gesamte linke und rechte Spurkranzspiel w_{ℓ}+w*ᵣ* an einer Schieneninnenseite 23 auftreten kann. Aus diesen Gründen muss die zu Fig. 6 für das Führungsprofil 31 beschriebene Schutzmaßnahme, die Einlauffase 39 an den Enden des Führungsprofils 31, bezogen auf die eingestellte Spurweite, entsprechend dem gesamten Spurkranzspiel w_{ℓ}+w*ᵣ* mit ≥ 3 w₀ und somit deutlich größer als das für jede Gleisseite vorgegebene Normmaß w₀ auszuformen, vorgesehen werden.

### Bezugszeichenliste

- 1: Messwagen (Gefährt)
- 11: Tragrahmen
- 12: Radachsen
- 13: Räder
- 14: Messkopfrahmen
- 15: Horizontalführung (für Messkopf)
- 16: Horizontalführungslager
- 17: Horizontaler Linearantrieb (für Messkopfausrichtung)
- 171: erster Horizontalzylinder
- 172: zweiter Horizontalzylinder
- 18: Bezugsbasis

- 2: Schiene
- 21: Schienenkopf
- 22: Schienenoberseite
- 23: Schieneninnenseite

- 3: Messkopf

- 31: Führungsprofil
- 311: vertikaler Gleitstößel (für Schienenoberseite)
- 312: horizontaler Gleitstößel (für Schieneninnenseite)
- 313: oberes Dämpfungselement
- 314: unteres Dämpfungselement
- 315: Sicherungselement
- 316: Unterlage (für Dämpfungselement)
- 317: Gleitkopf
- 318: zentrale Bohrung (Gaskanal)
- 319: Fluidzuführung (für Stößelgasgleitlager)
- 32: Vertikalführung (für Messkopf inkl. Führungsprofil)
- 33: Vertikalführungslager
- 34: vertikaler Linearantrieb (Vertikalzylinder)
- 35: Messkopfgehäuse
- 351: Vertikalführungen (für Messtaster)
- 352: Messtasterschlitten
- 353: Messtastervertikalzylinder (für Schlittenverstellung)
- 36: (taktiler) Messtaster
- 361: Messstab
- 362: Übertragungselement
- 363: Verschleißstößel (des Übertragungselements)
- 364: Druckzylinder (für Übertragungselement)
- 37: (erster) optischer Messtaster
- 38: (zweiter) optischer Messtaster
- 39: Einlauffase (des Führungsprofils)

- 4: (gegenüberliegender) Messkopf
- 41: (gegenüberliegendes) Führungsprofil

- 5: Messkopfkopplungseinheit
- 51: vereinfachtes Spurpaket
- 511: linker Spurzylinder
- 512: rechter Spurzylinder
- 513: Spurstange
- 514, 515: Wegmesssystem
- 52: Auflager
- 6: Koppeleinrichtung (für Messwagen an Arbeitsmaschine)
- 61: Hubzylinder (zum Ein- und Ausgleisen des Messwagens)
- 62: Kupplungsstange
- 63: Maschinenkupplungslager (Arbeitsmaschine)
- 64: Messwagenkupplungslager
- 65: Verriegelungshaken
- 66: Sicherungszapfen
- 67: Verriegelungszylinder

- AAH-1: (horizontale) Antriebsachse des Messkopfes
- FAH-1: (horizontale) Führungsachse des Messkopfes
- AAV-2: (vertikale) Antriebsachse des Messkopfes (Führungsprofil)
- FAV-2: (vertikale) Führungsachse des Messkopfes (Führungsprofil))
- GAA-2: Gelenkachse des Vertikalzylinders des Messkopfes
- AAV-3: (vertikale) Antriebsachse des Messtasters
- FAV-3: (vertikale) Führungsachse des Messtasters
- GAA-3: Gelenkachse des Vertikalzylinders des Messtasters
- AAV-4-1: (vertikale) Antriebsachse des Übertragungselements
- FAV-4-1: (vertikale) Führungsachse des Übertragungselements
- GAA-4-1: Gelenkachse des Druckzylinders (am Übertragungselement)
- GAA-4-2: Gelenkachse des Druckzylinders (am Messtastergehäuse)
- GFA-4-3: Drehführungsachse des Übertragungselements
- AAV-5: vertikale Antriebsachse des Messwagens (Aus- und Eingleisen)
- GAA-5: Gelenk der Hubzylinder (zum Aus- und Eingleisen)
- GAA-6: Gelenk der Hubzylinder (zum Aus- und Eingleisen)

- s: Arbeitsweg (der Gleitstößel)
- S_{I,} S_{II}, S_{III}: Zustände (der Gleitstößel)
- w₀: Ausgangsabstand Führungsprofil - Schiene
- w_{ℓ}: linkes Spurkranzspiel
- w*ᵣ*: rechtes Spurkranzspiel

## Patentansprüche

1. Anordnung zur Erfassung des Profils von Schienen in verlegten Gleisanlagen, mit mindestens einem Messkopf (3) zur Vermessung eines Querschnittsprofils von einem Schienenkopf (21) entlang eines Schienenweges, wobei der Messkopf (3) zum Querschnittsprofil des Schienenkopfes (21) einstellbar an einem Tragrahmen (11) angebracht ist, der mittels eines von den Schienen (2) geführten Gefährts (1) parallel entlang der Schiene (2) zur Aufnahme eines Längsprofils des Schienenkopfes (21) beweglich ist,
**dadurch gekennzeichnet, dass**
- der mindestens eine Messkopf (3) ein Führungsprofil (31) in Form einer L-förmigen Profilschiene aufweist, wobei das Führungsprofil (31) definiert an eine Schienenoberseite (22) und eine Schieneninnenseite (23) des Schienenkopfes (21) anpressbar ist, und ein Messkopfgehäuse (35) aufweist, das starr an das Führungsprofil (31) gekoppelt ist und in dem wenigstens ein Messtaster (36; 37, 38) so justierbar angeordnet ist, dass das Schienenkopfprofil gegenüber dem Führungsprofil (31), das die Führungs- und Bezugsbasis für den Messtaster (36) bildet, erfassbar ist, wobei die Länge des Führungsprofils (31) an die aufzufindenden Verschleißwelligkeiten des Schienenkopfes (21) angepasst ist,
- ein Messkopfrahmen (14) zur Aufnahme des mindestens einen Messkopfes (3) an jeder Seite des Tragrahmens (11) vorhanden ist, wobei
- der Messkopfrahmen (14) mittels zweier horizontaler Linearantriebe (17) über eine Horizontalführung (15) am Tragrahmen (11) horizontal und quer zur Schiene (2) verstellbar ist, um das Führungsprofil (31) gegenüber der Schieneninnenseite (23) des Schienenkopfes (21) zu bewegen und über die gesamte Länge des Führungsprofils (31) anzupressen, und
- der Messkopfrahmen (14) mindestens eine Vertikalführung (32) und zwei vertikale Linearantriebe (34) zur vertikalen Einstellung des Messkopfes (3) zur Schiene (2) aufweist, um das Führungsprofil (31) gegenüber der Schienenoberseite (22) des Schienenkopfes (21) zu bewegen und über die gesamte Länge des Führungsprofils (31) anzupressen.

2. Vorrichtung nach Anspruch 1, **dadurch gekennzeichnet, dass** das Führungsprofil (31) Reihen von Gleitstößeln (311; 312) aufweist, die entlang von zu erwartenden Kontaktlinien des L-förmigen Führungsprofils (31) mit der Schienenoberseite (22) und der Schieneninnenseite (23) angeordnet sind.

3. Vorrichtung nach Anspruch 2, **dadurch gekennzeichnet, dass** die Gleitstößel (311; 312) innerhalb des Führungsprofils (31) in Richtung von Schienenoberseite (22) oder Schieneninnenseite (23) mittels Dämpfungselementen (313; 314; 316) elastisch gelagert sind.

4. Vorrichtung nach Anspruch 2, **dadurch gekennzeichnet, dass** die Gleitstößel (311; 312) an einer dem Schienenkopf (21) zugewandten Seite jeweils einen kreisförmig verbreiterten Gleitkopf (317) aufweisen.

5. Vorrichtung nach Anspruch 4, **dadurch gekennzeichnet, dass** jeder Gleitstößel (311; 312) eine zentrale Bohrung (318) aufweist, an die eine Fluidzuführung (319) ankoppelbar ist, um zwischen Gleitkopf (317) und Schiene (2) eine Fluidlagerung zu erzeugen.

6. Vorrichtung nach Anspruch 1, **dadurch gekennzeichnet, dass** der Messkopf (3) in seinem Messkopfgehäuse (35) einen taktilen Messtaster (36) mit einem vertikal orientierten Messstab (361) aufweist, wobei der Messtaster (36) an einem Messtasterschlitten (352) befestigt ist, der mittels eines Messtastervertikalzylinders (353) entlang einer Messtasterführung (351) im Messkopfgehäuse (35) vertikal so bewegbar ist, dass ein vorgegebener Messweg des Messstabes (361) des taktilen Messtasters (36) gegenüber der Schienenoberseite (22) einstellbar ist.

7. Vorrichtung nach Anspruch 6, **dadurch gekennzeichnet, dass** das Führungsprofil (31) zwischen dem taktilen Messtaster (36) und der Schienenoberseite (22) ein Übertragungselement (362) in Form eines einseitigen Hebels aufweist, das an einem ersten Ende um eine horizontale Drehführungsachse (GFA-4-3) drehbar und an einem zweiten Ende mittels eines am Messkopfgehäuse (35) drehbar befestigten vertikalen Druckzylinders (364) vertikal so beweglich ist, dass ein zwischen der Drehführungsachse (GFA-4-3) und dem Druckzylinder (364) am Übertragungselement (362) angeordneter Verschleißstößel (363) gegen die Schienenoberseite (22) pressbar ist und der Messstab (361) des taktilen Messtasters (36) am Übertragungselement (362) dem Verschleißstößel (363) gegenüberliegend aufsitzt, sodass der Messstab (361) entsprechend einem Profilverlauf entlang der Schienenoberseite (22) auf und ab beweglich ist.

8. Vorrichtung nach Anspruch 7, **dadurch gekennzeichnet, dass** der Messstab (361) des taktilen Messtasters (36) eine geringere Andruckkraft gegenüber dem Übertragungselement (362) aufweist als der Druckzylinder (364) des Übertragungselements (362) über den Verschleißstößel (363) auf die Schienenoberseite (22) ausübt, um den Messtaster (36) von Schwingungen zu entkoppeln, die durch Bewegungen des Verschleißstößels (363) aufgrund eines Höhenprofils entlang der Schienenoberseite (22) bedingt sind.

9. Vorrichtung nach Anspruch 1, **dadurch gekennzeichnet, dass** der Messkopf (3) in seinem Messkopfgehäuse (35) mindestens einen optischen Messtaster (37; 38) aufweist, wobei der mindestens eine optische Messtaster (37; 38) zur Schiene (2) so ausgerichtet ist, dass er einen linienförmigen Messbereich quer zur Schiene (2) aufweist, der mindestens die Schienenoberseite (22) abtastet.

10. Vorrichtung nach Anspruch 1, **dadurch gekennzeichnet, dass** der Messkopf (3) im Messkopfrahmen (14) austauschbar befestigt ist, sodass ein Messkopf (3) im Messkopfrahmen (14) an beiden Seiten des Gefährts (1) wechselseitig einsetzbar ist oder zwei gegenüberliegende Messköpfe (3; 4) einfach austauschbar sind.

11. Vorrichtung nach Anspruch 1, **dadurch gekennzeichnet, dass** die zwei horizontalen Linearantriebe (17) des Messkopfrahmens (14) gegenüber dem Tragrahmen (11) des Gefährts (1) jeweils einen ersten und einen zweiten Horizontalzylinder (171; 172) aufweisen, die unabhängig voneinander steuerbar sind.

12. Vorrichtung nach Anspruch 11, **dadurch gekennzeichnet, dass** die zwei horizontalen Linearantriebe (17) jedes Messkopfrahmens (14) am Tragrahmen (11) des Gefährts (1) eine mittige Bezugsbasis (18) haben, die auf die Mitte der Schienenführung des Gefährts (1) festgelegt ist.

13. Vorrichtung nach Anspruch 11, **dadurch gekennzeichnet, dass** die ersten Horizontalzylinder (171) der horizontalen Linearantriebe (17) zum Eingleisen des Gefährts (1) mit den Messköpfen (3; 4) zwischen die Schienenköpfe (21) und die zweiten Horizontalzylinder (172) zum Spurhalten und Anpressen der Führungsprofile (31; 41) an die Schieneninnenseiten (23) für die Profilerfassung der Schienenköpfe (21) vorgesehen sind.

14. Vorrichtung nach Anspruch 11, **dadurch gekennzeichnet, dass** zur Spureinstellung der Messköpfe (3, 4) je Messkopfrahmen (14) zwei horizontale Linearantriebe (17) mit ersten und zweiten Horizontalzylindern (171, 172) gegenüber dem Tragrahmen (11) mit der mittig definierten Bezugsbasis (18) des Gefährts (1) vorgesehen sind, um die Steuerung zum Eingleisen und Anpressen der gegenüberliegenden Führungsprofilschienen (31, 41) vorzunehmen .

15. Vorrichtung nach Anspruch 1, **dadurch gekennzeichnet, dass** zur Spureinstellung der Messköpfe (3, 4) ein Spurpaket (52) vorgesehen ist, das eine teleskopartige direkte Verbindung zwischen den Messkopfrahmen (14) darstellt und einen linken Spurzylinder (521), einen rechten Spurzylinder (522) mit einer dazwischen angeordneten Spurstange (523) aufweist, wobei der linke und rechte Spurzylinder (521; 522) jeweils an einem Auflager (53) an den gegenüberliegenden Messkopfrahmen (14) befestigt sind, sodass eine direkte Steuerung zum Eingleisen und Anpressen der gegenüberliegenden Führungsprofile (31, 41) vorhanden ist.

## Claims

1. Arrangement for determining the profile of rails in laid track systems with at least one measuring head (3) for measuring a cross-sectional profile of a rail head (21) along a rail path, wherein the measuring head (3) is mounted on a support frame (11) so as to be adjustable with respect to the cross-sectional profile of the rail head (21), which support frame (11) is movable in parallel along the rail (2) by means of a vehicle (1) guided by the rails (2) for capturing a longitudinal profile of the rail head (21),
**characterized in that**
- the at least one measuring head (3) has a guide profile (31) in the form of an L-shaped profiled rail, wherein the guide profile (31) can be pressed, in a defined manner, to a rail top side (22) and a rail inner side (23) of the rail head (21), and a measuring head housing (35) which is rigidly coupled to the guide profile (31) and in which at least one measuring probe (36; 37, 38) is adjustably arranged in such a way that the rail head profile is determinable with respect to the guide profile (31) which forms the guide and reference basis for the measuring probe (36), wherein the length of the guide profile (31) is adapted to the identifiable wear corrugations of the rail head (21),
- a measuring head frame (14) for receiving the at least one measuring head (3) on each side of the support frame (11) is present, wherein
- the measuring head frame (14) is adjustable horizontally and transversely to the rail (2) by means of two horizontal linear drives (17) via a horizontal guide (15) on the support frame (11), in order to move the guide profile (31) relative to the rail inner side (23) of the rail head (21) and to press it over the entire length of the guide profile (31), and
- the measuring head frame (14) has at least one vertical guide (32) and two vertical linear drives (34) for vertical adjustment of the measuring head (3) with respect to the rail (2), in order to move the guide profile (31) relative to the rail top side (22) of the rail head (21) and to press it over the entire length of the guide profile (31).

2. Device according to claim 1, **characterized in that** the guide profile (31) has rows of sliding tappets (311; 312) which are arranged along expected contact lines of the L-shaped guide profile (31) with the rail top side (22) and the rail inner side (23).

3. Device according to claim 2, **characterized in that** the sliding tappets (311; 312) are elastically mounted within the guide profile (31) in the direction of the rail top side (22) or rail inner side (23) by means of damping elements (313; 314; 316).

4. Device according to claim 2, **characterized in that** the sliding tappets (311; 312) each have a circularly widened sliding head (317) on a side facing the rail head (21).

5. Device according to claim 4, **characterized in that** each sliding tappet (311; 312) has a central bore (318) to which a fluid supply (319) can be coupled, in order to produce a fluid bearing between the sliding head (317) and the rail (2).

6. Device according to claim 1, **characterized in that** the measuring head (3) has a tactile measuring probe (36) with a vertically oriented measuring rod (361) in its measuring head housing (35), wherein the measuring probe (36) is fastened to a measuring probe carriage (352) which is vertically movable by means of a measuring probe vertical cylinder (353) along a measuring probe guide (351) in the measuring head housing (35) such that a predetermined measuring path of the measuring rod (361) of the tactile measuring probe (36) is adjustable with respect to the rail top side (22).

7. Device according to claim 6, **characterized in that** the guide profile (31) has a transmission element (362) in the form of a one-sided lever between the tactile measuring probe (36) and the rail top side (22), which transmission element (362), at a first end, is rotatable about a horizontal rotation guide axis (GFA-4-3) and, at a second end, is vertically movable by means of a vertical pressure cylinder (364) rotatably fixed to the measuring head housing (35) so that a wear tappet (363) arranged between the rotation guide axis (GFA-4-3) and the pressure cylinder (364) on the transmission element (362) can be pressed against the rail top side (22) and the measuring rod (361) of the tactile measuring probe (36) on the transmission element (362) is seated opposite the wear tappet (363), so that the measuring rod (361) is movable up and down corresponding to a course of profile along the rail top side (22).

8. Device according to claim 7, **characterized in that** the measuring rod (361) of the tactile measuring probe (36) exerts a pressure force on the transmission element (362) which is lower than the pressure force which the pressure cylinder (364) of the transmission element (362) exerts on the rail top side (22) via the wear tappet (363), in order to decouple the measuring probe (36) from vibrations caused by movements of the wear tappet (363) due to a height profile along the rail top side (22).

9. Device according to claim 1, **characterized in that** the measuring head (3) has at least one optical measuring probe (37; 38) in its measuring head housing (35), wherein the at least one optical measuring probe (37; 38) is aligned with respect to the rail (2) in such a way that it has a linear measuring area transversely to the rail (2) and scans at least the rail top side (22).

10. Device according to claim 1, **characterized in that** the measuring head (3) is fastened in the measuring head frame (14) so as to be exchangeable, so that a measuring head (3) is interchangeably insertable in the measuring head frame (14) on both sides of the vehicle (1) or two opposing measuring heads (3; 4) are easily interchangeable.

11. Device according to claim 1, **characterized in that** the two horizontal linear drives (17) of the measuring head frame (14) each have a first and a second horizontal cylinder (171; 172) which are independently controllable relative to the support frame (11) of the vehicle (1).

12. Device according to claim 11, **characterized in that** the two horizontal linear drives (17) of each measuring head frame (14) have a central reference basis (18) on the support frame (11) of the vehicle (1) which is defined to be in the centre of the rail guide of the vehicle (1).

13. Device according to claim 11, **characterized in that** the first horizontal cylinders (171) of the horizontal linear drives (17) are provided for re-railing the vehicle (1) with the measuring heads (3; 4) between the rail heads (21) and the second horizontal cylinders (172) are provided for tracking and pressing the guide profiles (31; 41) to the rail inner sides (23) for profile determination of the rail heads (21).

14. Device according to claim 11, **characterized in that** for tracking adjustment of the measuring heads (3, 4) two horizontal linear drives per measuring head frame (14) (17) with first and second horizontal cylinders (171, 172) relative to the support frame (11) with the centrally defined reference basis (18) of the vehicle (1) are provided to carry out the control for re-railing and pressing the opposing guide profile rails (31, 41).

15. Device according to claim 1, **characterized in that** for tracking adjustment of the measuring heads (3, 4) a track package (52) is provided which represents a telescopic direct connection between the measuring head frames (14) and has a left-hand track cylinder (521) and a right-hand track cylinder (522) with a track rod (523) arranged therebetween, wherein the left-hand and right-hand track cylinders (521; 522) are respectively fixed to a support (53) on the opposing measuring head frames (14) so as to provide direct control for re-railing and pressing the opposing guide profiles (31, 41).

## Revendications

1. Dispositif pour détecter le profil de rails dans des voies ferrées posées avec au moins une tête de mesure (3) pour mesurer un profil en coupe transversale d'un champignon de rail (21) le long d'un chemin de rail, dans lequel la tête de mesure (3) est fixée à un cadre de support (11) de manière à être ajustable par rapport au profil en coupe transversale du champignon de rail (21), le cadre de support (11) étant déplaçable parallèlement le long du rail (2) au moyen d'un véhicule (1) guidé par les rails (2) pour capturer un profil longitudinal du champignon de rail (21),
**caractérisé en ce que**
- l'au moins une tête de mesure (3) a un profil de guidage (31) sous la forme d'un rail profilé en forme de L, le profil de guidage (31) pouvant être pressé d'une manière définie contre un côté supérieur du rail (22) et un côté intérieur du rail (23) du champignon de rail (21), et un boîtier de tête de mesure (35) qui est couplé de manière rigide au profil de guidage (31) et dans lequel est disposée de manière ajustable au moins un capteur de mesure (36; 37, 38) de telle façon que le profil du champignon de rail est détectable par rapport au profil de guidage (31) qui forme la base de guidage et de référence pour le capteur de mesure (36), la longueur du profil de guidage (31) étant adaptée aux ondulations d'usure identifiables du champignon de rail (21),
- un cadre de tête de mesure (14) destiné à recevoir au moins une tête de mesure (3) sur chaque côté du cadre de support (11) est présent,
- le cadre de tête de mesure (14) étant ajustable horizontalement et transversalement par rapport au rail (2) au moyen de deux entraînements linéaires horizontaux (17) par l'intermédiaire d'un guidage horizontal (15) situé sur le cadre de support (11) afin de déplacer le profil de guidage (31) par rapport au côté intérieur du rail (23) du champignon de rail (21) et afin de le presser sur toute la longueur du profil de guidage (31), et
- le cadre de tête de mesure (14) ayant au moins un guidage vertical (32) et deux entraînements linéaires verticaux (34) pour l'ajustement vertical de la tête de mesure (3) par rapport au rail (2) afin de déplacer le profil de guidage (31) par rapport au côté supérieur du rail (22) du champignon de rail (21) et afin de le presser sur toute la longueur du profil de guidage (31).

2. Dispositif selon la revendication 1, **caractérisé en ce que** le profil de guidage (31) a des rangées de poussoirs coulissants (311; 312) qui sont disposés le long de lignes de contact attendues du profil de guidage (31) en forme de L avec le côté supérieur du rail (22) et le côté intérieur du rail (23).

3. Dispositif selon la revendication 2, **caractérisé en ce que** les poussoirs coulissants (311; 312) sont montés de manière élastique dans le profil de guidage (31) dans la direction du côté supérieur du rail (22) ou du côté intérieur du rail (23) au moyen d'éléments amortisseurs (313; 314; 316).

4. Dispositif selon la revendication 2, **caractérisé en ce que** les poussoirs coulissants (311; 312) ont chacun une tête coulissante (317) élargie de manière circulaire sur un côté tourné vers le champignon de rail (21).

5. Dispositif selon la revendication 4, **caractérisé en ce que** chaque poussoir coulissant (311; 312) a un alésage central (318) auquel peut être couplée une alimentation en fluide (319) afin de produire un palier de fluide entre la tête coulissante (317) et le rail (2).

6. Dispositif selon la revendication 1, **caractérisé en ce que** la tête de mesure (3) a dans son boîtier de tête de mesure (35) un capteur de mesure tactile (36) avec une tige de mesure (361) orientée verticalement, le capteur de mesure (36) étant fixé à un chariot de capteur de mesure (352) qui est déplaçable verticalement au moyen d'un cylindre vertical de capteur de mesure (353) le long d'un guidage de capteur de mesure (351) dans le boîtier de tête de mesure (35), de sorte qu'un chemin de mesure prédéterminé de la tige de mesure (361) du capteur de mesure tactile (36) soit ajustable par rapport au côté supérieur du rail (22).

7. Dispositif selon la revendication 6, **caractérisé en ce que** le profil de guidage (31) a un élément de transmission (362) sous la forme d'un levier unilatéral entre le capteur de mesure tactile (36) et le côté supérieur du rail (22), l'élément de transmission (362), à une première extrémité, pouvant pivoter autour d'un axe de guidage en pivotement (GFA-4-3) horizontal et, à une seconde extrémité, étant déplaçable verticalement au moyen d'un cylindre de pression (364) vertical fixé sur le boîtier de tête de mesure (35) de manière à pouvoir pivoter, de telle façon qu'un poussoir d'usure (363) disposé entre l'axe de guidage en pivotement (GFA-4-3) et le cylindre de pression (364) sur l'élément de transmission (362) peut être pressé contre le côté supérieur du rail (22) et la tige de mesure (361) du capteur de mesure tactile (36) sur l'élément de transmission (362) est posée à l'opposée du poussoir d'usure (363), de telle façon que la tige de mesure (361) est déplaçable de haut en bas correspondant à un tracé de profil le long du côté supérieur du rail (22).

8. Dispositif selon la revendication 7, **caractérisé en ce que** la tige de mesure (361) du capteur de mesure tactile (36) exerce une force de pression sur l'élément de transmission (362) qui est inférieure à la force de pression que le cylindre de pression (364) de l'élément de transmission (362) exerce sur le côté supérieur du rail (22) par l'intermédiaire du poussoir d'usure (363), afin de découpler le capteur de mesure (36) de vibrations causées par des mouvements du poussoir d'usure (363) dus à un profil en hauteur le long du côté supérieur du rail (22).

9. Dispositif selon la revendication 1, **caractérisé en ce que** la tête de mesure (3) a au moins un capteur de mesure optique (37; 38) dans son boîtier de tête de mesure (35), l'au moins un capteur de mesure optique (37; 38) étant aligné par rapport au rail (2) de telle façon qu'il a une zone de mesure linéaire transversalement au rail (2) et balaye au moins le côté supérieur du rail (22).

10. Dispositif selon la revendication 1, **caractérisé en ce que** la tête de mesure (3) est fixée dans le cadre de tête de mesure (14) de manière échangeable, de façon qu'une tête de mesure (3) est insérable de manière interchangeable dans le cadre de tête de mesure (14) des deux côtés du véhicule (1) ou que deux têtes de mesure (3; 4) opposées sont facilement interchangeables.

11. Dispositif selon la revendication 1, **caractérisé en ce que** les deux entraînements linéaires horizontaux (17) du cadre de tête de mesure (14) ont chacun un premier et un deuxième cylindre horizontal (171; 172) qui peuvent être commandés indépendamment les uns des autres par rapport au cadre de support (11) du véhicule (1).

12. Dispositif selon la revendication 11, **caractérisé en ce que** les deux entraînements linéaires horizontaux (17) de chaque cadre de tête de mesure (14) ont une base de référence (18) centrale sur le cadre de support (11) du véhicule (1) qui est définie à être au centre du guidage de rail du véhicule (1).

13. Dispositif selon la revendication 11, **caractérisé en ce que** les premiers cylindres horizontaux (171) des entraînements linéaires horizontaux (17) sont présents pour poser sur rails le véhicule (1) avec les têtes de mesure (3; 4) entre les champignons de rail (21) et les deuxièmes cylindres horizontaux (172) sont présents pour garder la voie et pour presser les profils de guidage (31; 41) contre les côtés intérieurs du rail (23) pour la détection du profil des champignons de rail (21).

14. Dispositif selon la revendication 11, **caractérisé en ce que**, pour l'ajustement de voie des têtes de mesure (3, 4) deux entraînements linéaires horizontaux (17) par cadre de tête de mesure (14) avec des premiers et deuxièmes cylindres horizontaux (171, 172) par rapport au cadre de support (11) avec la base de référence (18) définie au centre du véhicule (1) sont présents pour effectuer la commande pour poser sur rails et presser les rails de profil de guidage (31, 41) opposés.

15. Dispositif selon la revendication 1, **caractérisé en ce que** pour l'ajustement de voie des têtes de mesure (3, 4), il est prévu un ensemble de voies (52) représentant une liaison directe télescopique entre le cadres de tête de mesure (14) et ayant un cylindre de voie gauche (521) et un cylindre de voie droit (522) avec une tige de voie (523) entre ceux-ci, les cylindres de voie gauche et droit (521; 522) étant chacun fixés à un support (53) sur les cadres de tête de mesure (14) opposés de manière à permettre une commande directe pour poser sur rails et presser les profils de guidage (31, 41) opposés.
